# EUROPÄISCHE PATENTSCHRIFT

(11) **EP 3 245 073 B1**
(45) Veröffentlichungstag und Bekanntmachung des Hinweises auf die Patenterteilung: **23.10.2019**
(21) Anmeldenummer: 16701573.4
(22) Anmeldetag: 11.01.2016
(51) Int. Cl.: B42D 25/23, G02B 5/18, B42D 25/29, B42D 25/45, B42D 25/324, B42D 25/351, B42D 25/328, B42D 25/24

(54) **MEHRSCHICHTKÖRPER UND VERFAHREN ZU DESSEN HERSTELLUNG**
MULTILAYER BODY AND METHOD FOR PRODUCING SAME
CORPS MULTICOUCHES ET PROCÉDÉ DE FABRICATION DE CELUI-CI

(30) Priorität: 14.01.2015 DE 102015100520
(43) Veröffentlichungstag der Anmeldung: 22.11.2017
(73) Patentinhaber: Leonhard Kurz Stiftung & Co. KG, 90763 Fürth (DE); OVD Kinegram AG, 6300 Zug (CH)
(72) Erfinder: WALTER, Harald, 8810 Horgen (CH); BREHM, Ludwig, 91325 Adelsdorf (DE); MADER, Sebastian, 6340 Baar (CH); TOMPKIN, Wayne Robert, 5400 Baden (CH); ÜNAL, Eser Alper, 55116 Mainz (DE)
(74) Vertreter: Louis Pöhlau Lohrentz
(86) Internationale Anmeldenummer: PCT/EP2016/050381
(87) Internationale Veröffentlichungsnummer: WO 2016/113220

(56) Entgegenhaltungen:
- WO-A1-03/095227
- DE-A1-102006 050 047
- US-A1- 2014 247 499

## Beschreibung

Die Erfindung betrifft ein Verfahren zum Herstellen eines Mehrschichtkörpers, einen derart hergestellten Mehrschichtkörper, sowie ein Sicherheitselement mit einem solchen Mehrschichtkörper.

Es ist bekannt, Dünnschichtsysteme in Mehrschichtkörpern einzusetzen, welche als Sicherheitselemente verwendet werden. Hierzu wird durch Vakuumauftrag auf ein Substrat eine semitransparente Metallschicht, eine transparente Abstandsschicht und eine zweite opake Metallschicht aufgebracht, so dass ein sogenanntes Fabry-Perot-System erhalten wird, welches einen Farbwechseleffekt bei Änderung des Betrachtungs- oder Beleuchtungswinkels zeigt. Das Substrat kann beispielsweise eine selbsttragende ein- oder mehrschichtige Folie, welche noch weitere aufgebrachte Schichten, beispielsweise Lackschichten, aufweisen kann, sein.

Untersuchungen haben nun gezeigt, dass der Farbwechseleffekt eines derartigen Sicherheitsmerkmals bei senkrechter Betrachtung bzw. relativ steilen Betrachtungswinkeln α von ca. 0° bis 20° im gesamten Bereich nahezu den gleichen Farbeindruck zeigt, auch wenn in das Substrat oder in eine auf das Substrat aufgebrachte Lackschicht eine Surface-Relief-Struktur abgeformt ist. Unter einer Surface-Relief-Struktur wird ein Oberflächenrelief in Form einer Freiformfläche, die insbesondere von einem linsenartig gestalteten, einen Vergrößerungs-, Verkleinerungs- oder Verzerrungseffekt erzeugenden Strukturen gebildet ist, verstanden. Vorzugsweise wird eine Surface-Relief-Struktur von einem Oberflächenrelief in Form einer Fresnel-Linsenstruktur gebildet.

Es ist die Aufgabe der vorliegenden Erfindung, einen Mehrschichtkörper sowie ein Verfahren zu dessen Herstellung bereitzustellen, welcher einen verbesserten optischen Eindruck und erhöhte Sicherheit gewährleistet.

Diese Aufgabe wird durch ein Verfahren mit den Merkmalen des Patentanspruchs 1, durch einen Mehrschichtkörper mit den Merkmalen des Patentanspruchs 8 sowie durch ein Sicherheitsdokument mit den Merkmalen des Patentanspruchs 15 gelöst.

Optional kann eine der beiden Metallschichten als opake Spiegelschicht ausgebildet sein.

Man erhält also einen Schichtaufbau, in welchem ein Dünnschichtsystem, gebildet aus der ersten Metallschicht, der Abstandsschicht und der zweiten Metallschicht mit einem Oberflächenrelief kombiniert ist. Da die Abstandsschicht auf das (metallisierte) Oberflächenrelief der Replizierschicht aufgebracht wird, können somit beide Grenzflächen der Abstandsschicht jeweils ein Oberflächenrelief ausbilden. Diese beiden Oberflächenreliefs sind mehr oder weniger korreliert, wie im Folgenden noch ausgeführt wird.

Wird die transparente Abstandsschicht nasschemisch aufgebracht, so liegt das Oberflächenrelief, das sich in der der Replizierschicht abgewandten Oberfläche der transparenten Abstandsschicht ausbildet, vorzugsweise relaxiert - also abgeschwächt - vor. Die Korrelation der beiden Oberflächenreliefs nimmt also ab.

Insbesondere reduziert sich die Strukturtiefe im weiteren Oberflächenrelief verglichen zum Oberflächenrelief der Replizierschicht. Wie stark relaxiert, sprich abgeschwächt, die Strukturen in der zweiten Grenzfläche vorliegen, hängt u.a. von den nasschemischen Beschichtungsparametern, insbesondere der Viskosität und Polarität sowie dem Materialsystem, insbesondere Polymersystem, des verwendeten Lacksystems, aber auch den verwendeten Lösungsmitteln ab. Auch die Nass- sowie die Trockenschichtdicke haben einen merklichen Einfluss.

Ferner haben Messungen gezeigt, dass nicht nur die Strukturtiefe an der zweiten Grenzfläche abnimmt, sondern dass sich teilweise auch die Form der Strukturen ändern kann. Wird beispielsweise eine Fresnelstruktur mit Blaze-Gitter in die Replizierschicht eingebracht, so konnte gezeigt werden, dass die Fresnelstrukturen an der zweiten Grenzfläche nicht nur weniger tief, sondern auch eher sinusförmig vorliegen.

Aufgrund der Formänderung des weiteren Oberflächenreliefs verglichen mit dem Oberflächenrelief der Replizierschicht weist die resultierende Abstandsschicht zwischen diesen beiden Oberflächenreliefs somit eine variable Schichtdicke auf. Da der Farbeindruck eines Dünnschichtsystems durch die Schichtdicke bestimmt wird, erhält man so einen Mehrschichtkörper, dessen Farbe sich über seine Fläche hinweg ändert. Insbesondere können so Farbgradienten oder auch Farbe-zu-Grau-Gradienten realisiert werden. "Grau" soll hier und im Folgenden für Unbunt oder auch Achromatisch stehen.

Durch die Freiformfläche des Oberflächenreliefs können zusätzlich unterschiedliche optische Effekte realisiert werden, beispielsweise die Ausbildung von Buchstaben, Zahlen, aber auch beliebigen sonstigen Objekten, welche virtuell aus der Oberfläche herauszuragen oder virtuell hinter die Oberfläche einzutauchen scheinen. Weitere Beispiele für die darstellbaren Objekte sind, schematisierte Berge, Länderumrisse, Tiere, Pflanzen oder Pflanzenteile wie Blätter oder auch Gebäude, Brücken, Tore sowie Gesichter oder Portraits insbesondere von berühmten Persönlichkeiten etc. Ferner könne z.B. Logos, die so erscheinen, als ob sie gegenüber der Substrat-Oberfläche vorgewölbt wären und/oder zurückspringen würden, d.h. so, als ob im Bereich der Freiformfläche eine gewölbte Oberfläche vorhanden wäre, erzeugt werden. Die Objekte erhalten also räumliche Tiefe, wobei sich zusätzlich bei geeigneter Ausbildung und Anordnung von linsenartig gestalteten Teilbereichen besonders charakteristische optische Effekte erzielen lassen, die den Wiedererkennungswert und damit die Identifikationswirkung entsprechender optisch variabler Elemente gerade in Kombination mit der durch das Dünnschichtsystem erzeugten Farbvariation stark erhöhen.

Ein derartiger Mehrschichtkörper kann auf einem Sicherheitsdokument angebracht werden, welches bevorzugt als Banknote, Ausweisdokument, Visadokument, Kreditkarte, Führerschein oder dergleichen ausgebildet ist. Auf diese Weise wird ein optisch ansprechendes und gleichzeitig besonders fälschungssicheres Sicherheitsdokument erhalten.

Unter einer zumindest teilweise transparenten Abstandsschicht wird hier eine Schicht mit einer Transmissivität bzw. Transmission von zumindest 50%, bevorzugt mindestens 75% und besonders bevorzugt mindestens 90% verstanden. Die Angaben verstehen sich als Mittelwert der Transmissivität bzw. Transmission über den sichtbaren Wellenlängenbereich von 430 nm bis 690 nm. Die für den Menschen sichtbaren Wellenlängen liegen in dem Bereich zwischen 380 nm und 780 nm des elektromagnetischen Spektrums, wobei die relative Empfindlichkeit des Auges beim Tagsehen unterhalb 430 nm und oberhalb 690 nm typischerweise weniger als 1% des Maximalwertes bei 555 nm beträgt.

In einer bevorzugten Ausführungsform wird die Abstandsschicht durch Tiefdrucken, Vorhanggießen, Schlitzgießen, Spin-Coating oder Dip-Coating aufgebracht. Mittels der genannten Verfahren können flüssige Medien, insbesondere Lacke, zuverlässig mit einer vorgegebenen Nassschichtdicke aufgebracht werden. Einige nasschemische Methoden zur Aufbringung der Abstandschicht eignen sich dafür, Abstandschichten mit lokal gezielt variierender Schichtdicke zu erzeugen. Beispielsweise kann beim Tiefdruck durch Variation der Näpfchenparameter auf der Druckwalze diese lokale Variation realisiert werden. Dies ermöglicht es, gezielt Zwei- oder Mehrfarbeneffekte zu erzeugen. Ferner kann mit einigen nasschemischen Methoden die Abstandsschicht nicht nur vollflächig, sondern auch partiell aufgebracht werden.

Bevorzugt wird die Abstandsschicht durch Aufbringen eines Lacks, insbesondere auf der Basis von einem der folgenden Material- bzw. Polymersysteme erzeugt, um so die gewünschten optischen Eigenschaften zu erzielen: Nitrocellulose, Epoxy-, Polyester-, Kolophonium-, Acrylat-, Alkyd-, Melamin-, PVA-, PVC-, Isocyanat- oder Urethansysteme. Der Lack kann auch aus einer Mischung von zwei oder mehr der Material- bzw. Polymersysteme bestehen.

Durch geeignete Zusatzstoffe können weitere Eigenschaften solcher Lacke, wie beispielsweise die Viskosität oder Polarität auf gewünschte und vorteilhafte Werte eingestellt werden. Ferner können durch Zusatzstoffe noch zusätzlich unsichtbare Sicherheitsmerkmale hinzugefügt werden. Beispielsweise können den Lacken UV- oder IR-aktive Lumineszenzfarbstoffe, insbesondere Fluoreszenzfarbstoffe, beigemischt sein.

Es ist ferner zweckmäßig, wenn zum Aufbringen der Abstandsschicht ein Lack mit einer Viskosität von 5 mPa•s bis 250 mPa•s, bevorzugt von 15 mPa•s bis 200 mPa•s und besonders bevorzugt zwischen 20 und 170 mPa•s verwendet wird.

Bezüglich der Polarität des Lackes ist es vorteilhaft, wenn die Lösemittel des Lacks zu mindestens 30 % Massenanteil aus Lösemittel mit einem Polaritätsindex größer 3,0, bevorzugt mindestens 50 % Massenanteil aus Lösemittel mit einem Polaritätsindex größer 3,0 bestehen. Der Polaritätsindex wird hierbei wie in Tabelle 2 der EP 2264491 A1 verstanden.

Durch die nasschemischen Beschichtungsparameter, insbesondere die Viskosität und Polarität sowie dem Materialsystem, insbesondere Polymersystem, des verwendeten Lacks, aber auch durch das verwendete Lösungsmittel kann beeinflusst werden, wie stark sich das Oberflächenrelief der Replizierschicht in der Oberfläche der Abstandsschicht abbildet. Damit können die eingangs beschriebenen optischen Eigenschaften des Dünnschichtsystems beeinflusst werden.

Bevorzugt wird die Abstandsschicht mit einer Nassschichtdicke von 1 µm bis 20 µm, bevorzugt von 2 µm bis 10 µm aufgebracht. Sowohl die Nass- als auch die Trockenschichtdicke beeinflussen ebenfalls die resultierende Strukturtiefe des sich in der der Replizierschicht abgewandten Seite der Abstandsschicht ausbildenden Reliefs und damit die optischen Eigenschaften des resultierenden Dünnschichtsystems.

Weiterhin ist es zweckmäßig, wenn die Abstandsschicht nach dem Aufbringen getrocknet wird, insbesondere bei einer Temperatur von 40°C bis 200°C, bevorzugt von 40°C bis 150°C. Bevorzugt liegt im Trockner der Druckmaschine ein Temperaturgradient vor, wobei die Temperatur am Anfang des Trockners zwischen 40°C und 60°C liegt und zum Ende des Trockners auf 100°C bis 150°C ansteigt.

Hierdurch wird ein kontrolliertes Abdampfen sowie eine kontrollierte Aushärtung des Lacks der Abstandsschicht gewährleistet bei gleichzeitig ausreichender Zeit für die Relaxation der Oberfläche der Abstandsschicht, was ebenfalls Einfluss auf das resultierende Oberflächenrelief hat und eine prozesssichere Fertigung des Mehrschichtkörpers mit konstanter Qualität ermöglicht.

Unter einer semi-transparenten Metallschicht wird eine Metallschicht mit einer Transmissivität bzw. Transmission von zumindest 10 % verstanden. Bevorzugt liegt sie zwischen 20% und 80%, besonders bevorzugt zwischen 25% und 65%. Alternativ wird oftmals anstelle der Transmission die optische Dichte OD angegeben. Die optische Dichte ist bei den semi-transparenten Metallschichten kleiner oder gleich 1,0. Bevorzugt liegt sie zwischen 0,7 und 0,1 und besonders bevorzugt zwischen 0,6 und 0,18. Weiter bevorzugt ist gleichzeitig die Reflektivität der semi-transparenten Metallschicht zumindest 10 % und bevorzugt mehr als 15 %. Die Angaben verstehen sich als Mittelwert der Transmissivität bzw. Transmission sowie der Reflektivität über den sichtbaren Wellenlängenbereich von 430 nm bis 690 nm.

Es ist ferner bevorzugt, wenn die semi-transparente Metallschicht durch Vakuumauftrag von Cr, Al, Cu, Ti, Ni, Ag oder Legierungen mit diesen Metallen wie z.B. Al_{96%}Cu_{4%} oder Inconel insbesondere mit einer Schichtdicke von 2 nm bis 20 nm, bevorzugt von 4 nm bis 15 nm erzeugt wird.

Unter einer opaken Spiegelschicht wird eine Metallschicht mit einer Reflektivität von zumindest 60 %, bevorzugt mehr als 70 % und besonders bevorzugt mehr als 80 % verstanden. Weiter bevorzugt ist eine Transmission der opaken Metallschicht von weniger als 10 %, bevorzugt weniger als 5 %.

Weiterhin ist es bevorzugt, wenn die opake Spiegelschicht durch Vakuumauftrag von Al, Cr, Ag, Cu, oder Legierungen mit diesen Metallen wie z.B. Al_{96%}Cu_{4%} insbesondere mit einer Schichtdicke von 15 nm bis 100 nm, bevorzugt von 20 nm bis 60 nm erzeugt wird.

Zweckmäßigerweise wird die erste Metallschicht und/oder die zweite Metallschicht durch Vakuumbedampfung oder Sputtern erzeugt. Hierdurch kann eine konstante Schichtdicke und eine gute optische Qualität der jeweiligen Schicht sichergestellt werden.

Es ist dabei bevorzugt, wenn die erste Metallschicht und/oder die zweite Metallschicht partiell demetallisiert wird, insbesondere durch Ätzen und/oder Lift-off. Bei der Strukturierung durch Ätzen wird nach dem Aufbringen der jeweiligen Metallschicht ein Ätzresist auf die Metallschicht aufgedruckt und die Metallschicht in den nicht vom Ätzresist bedeckten Bereichen durch ein

Ätzmittel, beispielsweise eine Lauge, entfernt. Der Ätzresist kann dann entfernt werden, er kann jedoch auch im Mehrschichtkörper verbleiben und zusätzliche dekorative Funktionen erfüllen, beispielsweise wenn es sich um einen gefärbten oder pigmentierten Resistlack handelt.

Bevorzugt wird die erste Metallschicht und/oder der zweiten Metallschicht so demetallisiert, dass ein demetallisierter Bereich der Metallschicht und/oder der zweiten Metallschicht ein Symbol, Bild, Logo, alphanumerisches Zeichen oder eine Kombination daraus ausbildet.

Hierdurch können zusätzliche optische Informationen oder Designs in den Mehrschichtkörper eingebracht werden.

Es ist weiter bevorzugt, wenn die erste Metallschicht und die zweite Metallschicht so demetallisiert werden, dass die demetallisierten Bereiche in Blickrichtung auf die Flächennormale der von dem Mehrschichtkörper aufgespannten Ebene überlappen. Hierdurch können durchscheinende Designs verwirklicht werden. Ein derartig ausgestaltetes Sicherheitselement erlaubt es, in den überlappenden demetallisierten Bereichen das Substrat des Sicherheitsdokumentes zu sehen, z.B. das bedruckte Banknotensubstrat oder auch ein Fensterelement in dem Substrat.

Es ist ferner zweckmäßig, wenn die erste Metallschicht und die zweite Metallschicht so demetallisiert werden, dass ein metallischer Bereich einer der Metallschichten die Außenkontur eines demetallisierten Bereichs der jeweils anderen Metallschicht überlappt.

Hierdurch können Positionierungs- oder Registerfehler der Außenkontur durch die jeweils andere Metallschicht zumindest teilweise überdeckt werden, so dass sich ohne großen Positionierungsaufwand ein ansprechendes und registergenau erscheinendes Design ergibt. Unter Registergenauigkeit bzw. Registriergenauigkeit bzw. Passergenauigkeit wird eine relative Lagegenauigkeit zweier Elemente, z.B. Bereiche oder Schichten zueinander verstanden. Diese Lagegenauigkeit kann mittels sogenannter Registermarken oder Passermarken eingestellt, welche speziell so ausgebildet sind, dass die jeweilige Toleranz der Lagegenauigkeit insbesondere optisch besonders gut abgelesen oder maschinell detektiert werden kann. Diese Registermarken oder Passermarken können dabei separate Elemente darstellen, die beispielsweise in einem Randbereich angeordnet sind. Diese Registermarken oder Passermarken können dabei aber auch integrale Bestandteile des Mehrschichtkörpers darstellen, welche sich optisch eindeutig detektieren lassen, z.B. charakteristische Konturen eines Motivs oder Strukturen des Motivs oder Strukturen des Oberflächenreliefs oder ähnliches.

Es ist vorteilhaft, wenn das Oberflächenrelief und das weitere Oberflächenrelief an den beiden Grenzflächen der Abstandsschicht zumindest teilweise korrelieren.

Unter einer zumindest teilweisen Korrelation der Reliefs wird dabei verstanden, dass die Reliefs ähnlich, aber nicht identisch sind, und insbesondere durch eine Abbildungsfunktion, beispielsweise eine Stauchung, ineinander überführbar sind. Im einfachsten Fall besitzen die Oberflächenreliefs also die gleiche Struktur, jedoch unterschiedliche Relieftiefen. Weiter bevorzugt liegen die Spitzen bzw. die Täler der Reliefstrukturen jeweils übereinander, d.h. die Spitzen des Oberflächenreliefs in der Grenzfläche zwischen der Replizierschicht und der ersten Metallschicht liegen vertikal gesehen über den Spitzen des Oberflächenreliefs in der Grenzfläche zwischen der Abstandschicht und der zweiten Metallschicht.

Wie eingangs erläutert, sind jedoch auch strukturelle Unterschiede möglich, wie beispielsweise eine Abrundung eines Blaze-Gitters in eine mehr sinusoidale Querschnittsstruktur. Wie bereits ausgeführt, werden die gewünschten Eigenschaften des Mehrschichtkörpers gerade durch diese teilweise Korrelation ermöglicht, so dass Farbverläufe oder Farbe-zu-Grau-Gradienten im Erscheinungsbild des Mehrschichtkörpers ermöglicht werden.

Es ist dabei besonders vorteilhaft, wenn eine Strukturtiefe des weiteren Oberflächenreliefs höchstens 90%, bevorzugt 80%, weiter bevorzugt höchstens 50% einer Strukturtiefe des Oberflächenreliefs beträgt.

Beträgt die Strukturtiefe des weiteren Oberflächenreliefs mehr als 50% der Strukturtiefe des Oberflächenreliefs, so zeigt sich im Erscheinungsbild des Mehrschichtkörpers eine Farbe-zu-Grau-Gradient, andernfalls ergibt sich ein Verlauf zwischen zwei Farben.

Die Strukturtiefe des Oberflächenreliefs kann zwischen 200 nm und 20 µm liegen. Vorzugsweise beträgt die Strukturtiefe des Oberflächenreliefs 200 nm bis 2000 nm, bevorzugt 300 nm bis 1500 nm. Diese Tiefenbereiche sind besonders geeignet in Kombination mit den nachfolgend beschriebenen bevorzugten Werten für die mittlere Trockenschichtdicke der Abstandsschicht die gewünschten optischen Effekte zu erzielen.

Es ist ferner bevorzugt, wenn die Abstandsschicht eine mittlere Trockenschichtdicke von 200 nm bis 800 nm, bevorzugt von 300 nm bis 700 nm aufweist, wobei die Trockenschichtdicke in lateraler Richtung variabel sein kann.

Die lokale Trockenschichtdicke d bestimmt zusammen mit dem Brechungsindex n der Abstandsschicht sowie dem Betrachtungswinkel α den resultierenden Farbeindruck. Bei einem Brechungsindex von 1,5 und einem Betrachtungswinkel von 30° ergibt sich beispielsweise bei einer Trockenschichtdicke von 425nm ein roter, bei einer Dicke von 350nm einen grüner und bei einer Dicke von 300nm ein blauer Farbeindruck.

Weiter ist es bevorzugt, wenn die Abstandsschicht einen Brechungsindex von 1,35 bis 1,65, bevorzugt von etwa 1,5 aufweist. Wie bereits erläutert, kann durch das Zusammenspiel von Brechungsindex und Trockenschichtdicke der Farbeindruck des Mehrschichtkörpers eingestellt werden.

Vorteilhafterweise weist das Oberflächenrelief Mikrostrukturen mit einem Tiefen-zu-Breiten-Verhältnis von weniger als 0,5, bevorzugt von weniger als 0,4 auf. Die Mikrostrukturen können refraktive - z.B. Mikrospiegel - oder diffraktive Mikrostrukturen - z.B. fresnelartige Diffraktionsgitter - sein. Unter Breite der Mikrostrukturen wird hier der Abstand von Spitze zu Spitze oder die Periode der Mikrospiegel bzw. der diffraktiven Mikrostrukturen verstanden.

Bevorzugt ist das Oberflächenrelief in Form einer Freiformfläche als diffraktives Freiformelement mit einer Gitterstruktur ausgebildet.

Es ist dabei vorteilhaft, wenn die Gitterstruktur im Wesentlichen den Umrisslinien der Freiformfläche folgende Gitterlinien umfasst, wobei sich der Abstand der Gitterlinien und/oder die Gittertiefe über die Gitterstruktur hinweg verändert und sich insbesondere vom Mittelbereich der Freiformfläche aus zu deren Rand hin kontinuierlich verändert. Die Periode - sprich der Abstand der Gitterlinien - und/oder die Tiefe des Oberflächenreliefs variiert, um die gewünschte Freiformfläche darzustellen. Deshalb ist es weiter bevorzugt wenn das Tiefen-zu-Breiten-Verhältnis in mindestens 80 % der Fläche der Freiformfläche weniger als 0,3 beträgt. Die Gitterlinien können, müssen aber nicht, durchgehend den Umrisslinien der Freiformfläche folgen. Sie können auch unterbrochen sein, insbesondere mit einem Zufallsmuster unterbrochen sein, z.B. um eine streuende Wirkung zu dem Effekt der Gitterstruktur hinzuzufügen. Dies kann den Betrachtungswinkel für den Gesamteffekt vergrößern. Die Gitterstruktur kann auch alternativ oder zusätzlich mit einer matt streuenden Struktur überlagert sein. Sowohl unterbrochene Gitterlinien als auch die Überlagerung mit einer matt streuenden Struktur können zu einem achromatischeren Erscheinungsbild der Gitterstruktur - nicht des Dünnschichtsystems - führen.

Durch eine solche Kombination einer Freiformfläche mit einer Gitterstruktur kann ein diffraktiver Linseneffekt erzielt werden, der dem Mehrschichtkörper das gewünschte Erscheinungsbild verleiht. Eine Besonderheit der von Gitterstrukturen gebildeten diffraktiven Freiformelemente ist darin zu sehen, dass derartige diffraktive Linsenstrukturen - anders als refraktive Linsen - abhängig von der für die Beleuchtung oder Betrachtung des Objekts jeweils verwendeten Licht-Wellenlänge einen verschiedenen visuellen Eindruck erzeugen, wodurch sich wiederum besondere Design- oder Sicherheits-Effekte erzielen lassen.

Es ist bevorzugt, wenn eine Periode der Gitterlinien zumindest in einem Teilbereich der Gitterstruktur weniger als 50 µm, bevorzugt weniger als 30 µm, besonders bevorzugt weniger als 15 µm beträgt.

Insbesondere durch eine Variation der Periode kann die lokale Trockenschichtdicke beeinflusst werden. Bei einem Lacksystem, welches zu einer Entkopplung der Grenzflächen - also der beiden Oberflächenreliefs - führt, kann neben der Formänderung bzw. Formnivellierung noch ein weiterer Effekt auftreten. Vermutlich Kapillarkräfte, welche von den Gitterfurchen des Oberflächenreliefs ausgehen, drängen beim Trocknungsprozess der nasschemisch aufgebrachten Abstandsschicht Material der Abstandsschicht in Richtung größerer Periode der Strukturen - typischerweise Richtung des Zentrums des Oberflächenreliefs. Dadurch ist die trockene Schichtdicke im Zentrum, bzw. in Bereichen mit grober Periode Δx größer als am Rand, bzw. in Bereichen mit kleinerer Periode Δx der Reliefstrukturen. Der resultierende Farbgradient ist kontinuierlich und im perfekten Register zu der Form des Oberflächenreliefs. Typischerweise fängt der Bereich mit der zweiten Farbe an, wenn die Periode der Mikrostrukturen ≤30 µm, bevorzugt ≤20 µm, insbesondere ≤15 µm ist.

Es ist weiter bevorzugt, wenn die Substratfolie aus flexibler Kunststofffolie besteht. Beispielsweise besteht die Substratfolie aus PET, PEN, MOPP, PP, PA, PC, COC oder PVC.

Zweckmäßigerweise weist die Substratfolie eine Schichtdicke von 4 µm bis 500 µm, bevorzugt von 8 µm bis 150 µm und besonders bevorzugt von 12 µm bis 50 µm auf.

Es ist weiter vorteilhaft, wenn der Mehrschichtkörper zumindest eine weitere transluzente Lackschicht aufweist, die mittels zumindest eines Farbstoffs und/oder Pigments eingefärbt ist. Vorzugsweise handelt es sich bei dem mindestens einen Farbstoff um einen löslichen Farbstoff oder Lumineszenzstoff. Vorzugsweise werden Farbstoffe aus folgenden Stoffgruppen eingesetzt: Metallkomplexfarbstoffe, insbesondere mit Cr³⁺ oder Co²⁺ als Zentralatom. Beispiele sind die Neo-Zapon Farbstoffe von BASF und Orasol-Farbstoffe von BASF (ehemals CIBA).

Hierdurch können weitere Farbeffekte erzielt werden, bzw. die Farbeffekte des Dünnschichtsystems gefiltert und moduliert werden. Beispielsweise kann ein roter Farbeindruck des Dünnschichtsystems durch eine gelb eingefärbte transluzente Lackschicht zu einem orangen Farbeindruck moduliert werden.

Dabei ist es insbesondere zweckmäßig, wenn die zumindest eine weitere Lackschicht zwischen der Replizierschicht und der Substratfolie angeordnet ist. Zusätzlich oder alternativ kann auch die Replizierschicht mittels eines Farbstoffs und/oder Pigments eingefärbt sein, um ebenfalls die genannten Farbeffekte zu erzeugen.

Zusätzlich oder alternativ kann das Oberflächenreliefs in Form einer Freiformfläche noch mit andere Effekte erzeugenden Strukturen kombiniert sein. Beispielsweise kann das Oberflächenrelief noch mit einem 2D-, oder 2D/3D- oder 3D-Hologramm gerastert, insbesondere in einer Interlaced-Anordnung kombiniert sein, welches eine Zahl schwebend über der Freiformfläche darstellt. Bevorzugt ist der Flächenanteil der andere Effekte erzeugenden Strukturen klein, um den Farbeffekt des Oberflächenreliefs in Form einer Freiformfläche in Kombination mit dem Dünnschichtsetup möglichst wenig zu beeinflussen. Bevorzugt ist der Flächenanteil kleiner als 30%, besonders bevorzugt kleiner als 20% und insbesondere bevorzugt ≤10%.

Der Mehrschichtkörper kann als Transferfolie oder als Laminierfolie ausgeführt sein. Bei einer Transfolie ist die Substratfolie mittels einer Ablöseschicht mit den übrigen Schichten des Mehrschichtkörpers, welche eine Transferlage ausbilden, verbunden. Bei der Applikation des Mehrschichtkörpers auf einen Untergrund wird der Mehrschichtkörper auf dem Untergrund befestigt, insbesondere aufgeklebt und anschließend die Substratfolie von der applizierten Transferlage abgezogen. Die Applikation auf den Untergrund kann dabei beispielsweise mittels Heißprägen oder mittels Kaltprägen erfolgen. Bei einer Laminierfolie verbleibt die Substratfolie auch nach der Applikation des Mehrschichtkörpers auf einen Untergrund auf dem Mehrschichtkörper.

Im Folgenden werden die Erfindung und ihre Ausführungsformen anhand der Zeichnung näher erläutert. Es zeigen:
- Fig. 1: Eine schematische Veranschaulichung der Funktionsweise eines Fabry-Perot-Dünnschichtsystems nach dem Stand der Technik;
- Fig. 2: Eine schematische Darstellung einer dreidimensionalen Freiformfläche in Draufsicht und im Schnitt;
- Fig. 3: Eine schematische Detailansicht eines Oberflächenreliefs, welches die in Fig. 2 gezeigte dreidimensionale Freiformfläche optisch imitiert sowie einen vergrösserten Ausschnitt des Oberflächenreliefs;
- Fig. 4: Eine schematische Schnittdarstellung durch einen Mehrschichtkörper mit einem Oberflächenrelief und einem Dünnschichtsystem nach dem Stand der Technik;
- Fig. 5: Eine schematische Schnittdarstellung durch ein Ausführungsbeispiel eines Mehrschichtkörpers mit einem Oberflächenrelief und einem Dünnschichtsystem mit nasschemisch aufgetragener Abstandsschicht;
- Fig. 6: Eine schematische Schnittdarstellung durch ein weiteres Ausführungsbeispiel eines Mehrschichtkörpers mit einem Oberflächenrelief und einem Dünnschichtsystem mit nasschemisch aufgetragener Abstandsschicht;
- Fig. 7: Eine schematische Schnittdarstellung durch ein weiteres Ausführungsbeispiel eines Mehrschichtkörpers mit einem Oberflächenrelief und einem Dünnschichtsystem mit nasschemisch aufgetragener Abstandsschicht;
- Fig. 8: Eine schematische Schnittdarstellung durch ein weiteres Ausführungsbeispiel eines Mehrschichtkörpers mit einem Oberflächenrelief und einem Dünnschichtsystem mit nasschemisch aufgetragener Abstandsschicht;
- Fig. 9: Reflektionsspektren von Mehrschichtkörpern mit einem Oberflächenrelief und einem Dünnschichtsystem;
- Fig. 10: Eine schematische Schnittdarstellung durch ein weiteres Ausführungsbeispiel eines Mehrschichtkörpers mit einem Oberflächenrelief, einer Farbschicht und einem Dünnschichtsystem mit nasschemisch aufgetragener Abstandsschicht;
- Fig. 11: Eine schematische Schnittdarstellung durch ein weiteres Ausführungsbeispiel eines Mehrschichtkörpers mit einem Oberflächenrelief, einer partiellen Metallschicht und einem Dünnschichtsystem mit nasschemisch aufgetragener Abstandsschicht;
- Fig. 12: Eine schematische Ansicht eines Sicherheitsdokuments mit einem Mehrschichtkörper nach Fig. 11;
- Fig. 13: Eine schematische Ansicht eines mittels eines Mehrschichtkörpers nach Fig. 11 realisierten Motivs;
- Fig. 14: Eine schematische Darstellung der Verfahrensschritte zur Herstellung eines Ausführungsbeispiels eines Mehrschichtkörpers mit partieller Demetallisierung;
- Fig. 15: Ein mittels eines Verfahrens nach Fig. 14 hergestelltes Sicherheitselement in der Vorderansicht;
- Fig. 16: Eine schematische Darstellung der Verfahrensschritte zur Herstellung eines alternativen Ausführungsbeispiels eines Mehrschichtkörpers mit partieller Demetallisierung;
- Fig. 17: Ein mittels eines Verfahrens nach Fig. 16 hergestelltes Sicherheitselement in der Vorderansicht;
- Fig. 18: Eine schematische Darstellung der Verfahrensschritte zur Herstellung eines weiteren alternativen Ausführungsbeispiels eines Mehrschichtkörpers mit partieller Demetallisierung;
- Fig. 19: Eine schematische Darstellung der Verfahrensschritte zur Herstellung eines weiteren alternativen Ausführungsbeispiels eines Mehrschichtkörpers mit partieller Demetallisierung.

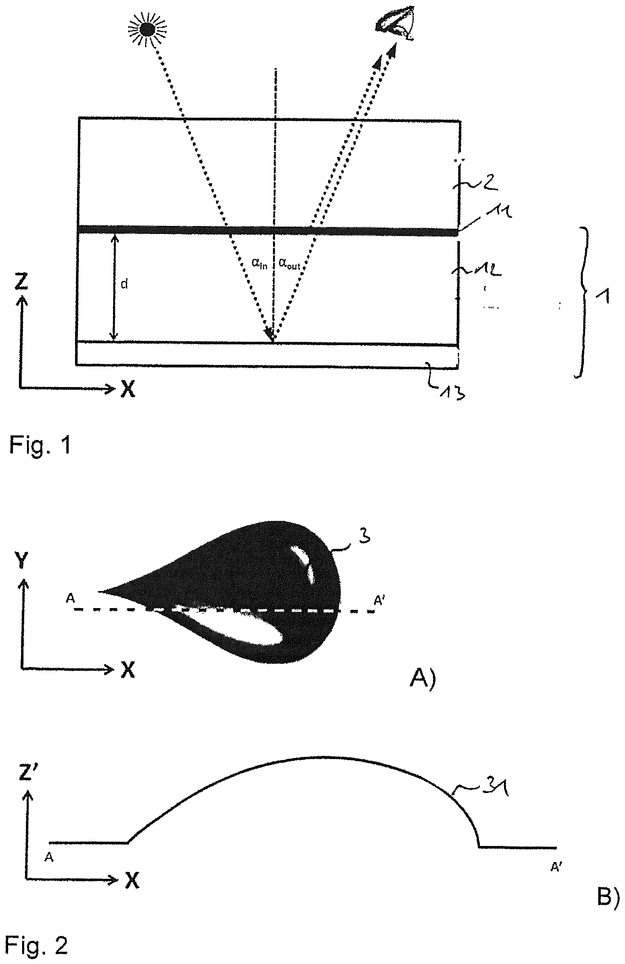

Ein in Fig. 1 schematisch dargestelltes Fabry-Perot-Dünnschichtsystem 1 besteht aus einer semi-transparenten Schicht 11, meist einer ersten Metallschicht (z.B. Cr, Al, Cu, Ti, Ag, Ni oder Inconel), einer transparenten Abstandsschicht 12 (z.B. MgF₂, SiO₂ oder einem Polymerlack) sowie einer zweiten Metallschicht 13. Letztere besteht ebenfalls meist aus Metall (z.B. Al, Cr, Ag, Cu). Sie kann opak oder auch semi-transparent sein. Die Schichten 11, 12, 13 sind auf eine Substratfolie 2 aufgetragen. Die Reihenfolge der Schichten 11, 12 und 13 kann auch umgekehrt vorliegen und der Effekt von der Rückseite, z.B. durch ein Fenster eines Sicherheitsdokumentes hindurch, sichtbar sein.

Ein Teil des unter dem Winkel αᵢₙ einfallenden Lichts wird an der semitransparenten ersten Metallschicht 11 reflektiert, ein Teil wird absorbiert und ein Teil wird transmittiert. Der transmittierte Teil durchdringt die transparente Abstandsschicht 12 und wird an der zweiten Metallschicht 13 reflektiert. Der reflektierte Teil des Lichts durchdringt wieder die transparente Abstandsschicht 12 und wird teilweise durch die semitransparente Schicht 11 transmittiert. Dieser transmittierte Teil interferiert mit dem an der semitransparenten Schicht 11 reflektierten Anteil des Lichtes und erreicht das Auge des Betrachters unter dem Winkel αₒᵤₜ wobei gilt αᵢₙ=αₒᵤₜ=α. Lichtbrechung wurde in dieser schematischen Darstellung vernachlässigt. Aufgrund der Interferenz der Lichtanteile erscheint das Licht für den Betrachter farbig. Der Farbeindruck hängt hierbei u.a. von der Dicke d sowie dem Brechungsindex n der Abstandschicht 12 und dem Winkel α ab. Konstruktive Interferenz tritt auf wenn der Gangunterschied Δ zwischen dem an der ersten Metallschicht 11 und dem an der zweiten Metallschicht 13 reflektierten Anteil des Lichts ein Vielfaches der Wellenlänge λ ist.

Es gibt verschiedene Beschichtungsmethoden mit denen ein derartiges Schichtsystem 1 hergestellt werden kann. Die beiden Metallschichten 11, 13 werden üblicherweise vakuumtechnisch aufgebracht, z.B. mittels Dampfen oder Sputtern. Die transparente Abstandsschicht 12 kann hingegen einerseits vakuumtechnisch aufgebracht werden, z.B. mittels thermischen Dampfens von MgF₂. Andererseits lassen sich solche transparenten Schichten 12 auch nasschemisch herstellen, z.B. mittels Tiefdruck oder Schlitzgiessen.

Diese verschiedenen Herstellverfahren führen auf glatten Substraten 2 zu sehr ähnlichen Ergebnissen, es wird eine Fläche mit einem homogenen Farbkippeffekt bzw. Farbwechseleffekt erzielt. Auf strukturierten Oberflächen hingegen resultieren nasschemisch aufgebrachte transparente Abstandsschichten 12 in deutlich anderen Schichtverläufen als vakuumtechnisch aufgebrachte Abstandsschichten 12. Dies liegt unter anderem daran, dass vakuumtechnisch aufgebrachte Schichten Stück für Stück aufwachsen, während nasschemisch aufgebrachte Schichten für gewöhnlich auf einmal aufgebracht werden und die flüssige Schicht im Trocknungs- und/oder Härtungsprozess, z.B. UV-Härtung, nur noch aushärtet.

Solche Dünnschichtsysteme 1 können folglich nicht nur auf die in Fig. 1 gezeigten glatten Oberflächen aufgebracht werden, sondern auch auf strukturierte Oberflächen. Ein Beispiel hierfür ist in Fig. 2 gezeigt. Oberflächenreliefstrukturen 3 erzeugen eine dreidimensionale Oberfläche, welche aus der Substratebene herauszuragen scheint. Die Form dieser 3D-Oberfläche kann nahezu beliebig gewählt werden (Freiform). In Fig. 2 imitiert die Oberflächenstruktur 3 einen optisch dreidimensional wirkenden Tropfen als Freiformfläche. Die Strukturen sind eine spezielle Variante von Fresnelllinsen. Fig. 2a zeigt eine schematische Draufsicht auf ein derartiges Oberflächenrelief 3, welches den 3D-Tropfen imitiert. Mit A-A' ist ein beispielhafter Schnitt durch diese dreidimensionale Form angezeigt.

Eine schematische Seitenansicht entlang des Schnitts A-A' durch diese dreidimensionale Form zeigt Fig. 2b, wobei hier das scheinbar erzeugte (nicht das real vorliegende) Höhenprofil 31 in z'-Richtung dargestellt ist.

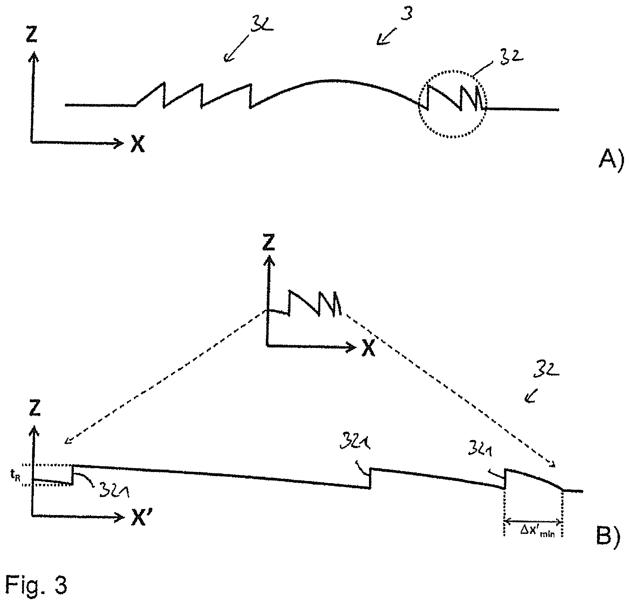

Eine derartige dreidimensionale Oberflächenform bzw. ein scheinbares Höhenprofil 31 kann durch fresnellinsenartige Mikrostrukturen 32 optisch erzeugt werden. Fig. 3a zeigt eine schematische (nicht massstabsgetreue) Seitenansicht von beispielhaften fresnelartigen Reliefstrukturen 32, welche die dreidimensionale Tropfenform aus Fig. 2 optisch erzeugen. Zur Vereinfachung sind nur wenige Furchen der Fresnellinse dargestellt. Bei massstabsgetreuer Darstellung müssten es wesentlich mehr sein. Ferner ist zur einfacheren Darstellung die z-Skala stark gestreckt wiedergegeben. Neben den dargestellten kontinuierlichen Fresnelstrukturen können auch sogenannte binäre Fresnelstrukturen einen ähnlichen Effekt erzeugen. D.h. der vergleichsweise stark 3D-gewölbte Eindruck aus Fig. 2a, 2b kann mit speziellen diffraktiven Strukturen simuliert werden, deren Ausdehnung in z-Richtung erheblich geringer sein kann als der erzielte optische Effekt vortäuscht.

Fig. 3b zeigt den in Fig. 3a mit einem gepunkteten Kreis gekennzeichneten Bereich vergrößert und etwa maßstabsgetreu dargestellt. In den derzeitig verwendeten Heißprägefolien ist die kleinste Periode bzw. Strukturbreite Δx'ₘᵢₙ der Oberflächenreliefstrukturen 32 ca. 3µm und damit in etwa zwei bis dreimal grösser als die Tiefe t_{R}. Das mittlere Tiefen-zu-Breiten Verhältnis der Strukturelemente ist folglich kleiner als 0,5. Typischerweise liegt hierbei die Tiefe der Strukturen t_{R} im Bereich von 500 nm bis 1500 nm. Die Winkel der Flanken 321 der Reliefstrukturen 32 sind in Realität folglich deutlich weniger steil als die Fig. 3a erscheinen lässt.

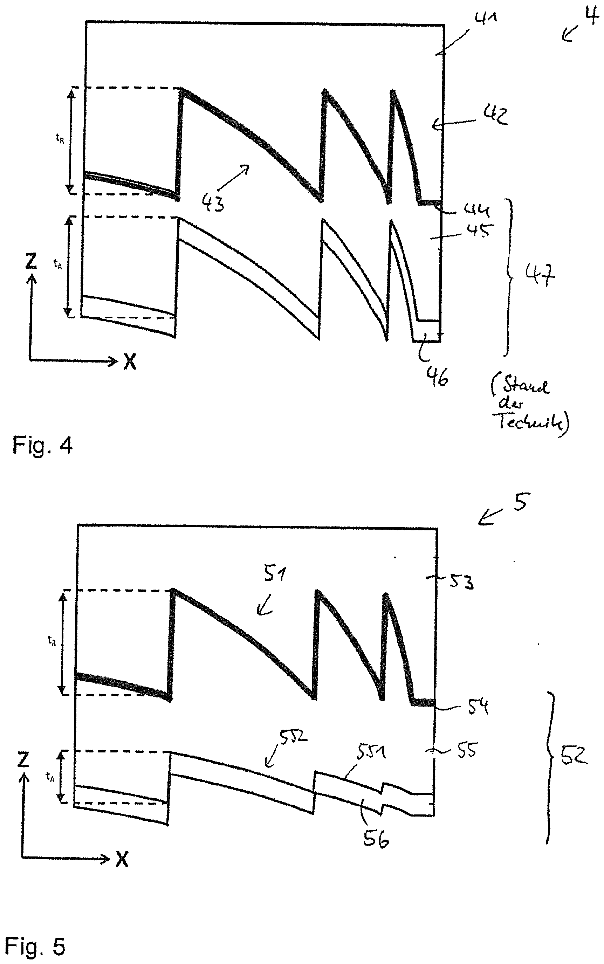

In Fig. 4 ist ein nicht maßstabsgetreuer schematischer Querschnitt durch einen aus dem Stand der Technik bekannten Mehrschichtkörper 4 gezeigt. Dieser umfasst eine Substratfolie 41 mit einer Replizierschicht 42, in die ein Oberflächenrelief 43 eingebracht ist. Auf diese sind jeweils vakuumtechnisch eine semi-transparente erste Metallschicht 44, eine transparente Abstandsschicht 45 und eine zweite Metallschicht 46 aufgebracht, die ein Dünnschichtsystem 47 der beschriebenen Art bilden. Das replizierte Oberflächenrelief 43 bildet sich dabei erkennbar in den weiteren Schichten ab. Es ist zu erkennen, dass die replizierten Strukturen nahezu identisch in der zweiten Grenzfläche der transparenten Abstandsschicht 45 - also der Grenzfläche zwischen der Abstandsschicht 45 und der zweiten Metallschicht 46 - vorliegen. Dies ist der Fall bei rein vakuumtechnisch aufgebrachten Abstandsschichten 45, da hier diese Schichten Stück für Stück aufwachsen. Die Strukturtiefe t_{A} auf der dem Replizierlack gegenüberliegenden Seite der Abstandsschicht 45 liegt - bei den typischen Schichtdicken der vakuumtechnisch aufgebrachten Abstandsschicht 45 - meist im Bereich von 90% bis 100% der ursprünglichen Tiefe im Replizierlack t_{R}. Die Spitzen der Strukturen können hierbei aber auch leicht abgerundet vorliegen.

Der Farbeffekt eines derartigen Sicherheitsmerkmals - bestehend aus den Reliefstrukturen 43 der Replizierschicht 42, beschichtet mit dem Dünnschichtsystem 47, zeigt bei senkrechter Betrachtung bzw. relativ steilen Betrachtungswinkeln α von ca. 0° bis 20° im gesamten Bereich der Reliefstrukturen nahezu den gleichen Farbeindruck, da die Schichtdicke überall nahezu gleich ist. Der Dünnschichtfilter wirkt also wie in einem flachen - sprich unstrukturierten - Bereich.

Fig. 5 zeigt nicht maßstabsgetreu ein Ausführungsbeispiel eines Mehrschichtkörpers 5, der ein Oberflächenrelief 51 mit einem Dünnschichtsystem 52 kombiniert. Der Mehrschichtkörper 5 umfasst eine Substratfolie 53, die bevorzugt aus PET, PEN, MOPP, PP, PA, PC, COC oder PVC besteht und eine Schichtdicke von 4 µm bis 500 µm, bevorzugt von 8 µm bis 150 µm und besonders bevorzugt von 12 µm bis 50 µm aufweist.

In die Substratfolie 53 oder in eine auf der Substratfolie 53 aufgebrachte Replizierschicht ist ein Oberflächenrelief 51 eingebracht. Dieses ist bevorzugt als diffraktives Freiformelement mit einer Gitterstruktur ausgebildet.

Es ist dabei vorteilhaft, wenn die Gitterstruktur im Wesentlichen den Umrisslinien der Freiformfläche folgende Gitterlinien umfasst, wobei sich der Abstand der Gitterlinien und/oder die Tiefer der Gitterstruktur über die Gitterstruktur hinweg verändert und sich insbesondere vom Mittelbereich der Freiformfläche aus zu deren Rand hin kontinuierlich verändert.

Durch eine solche Kombination einer Freiformfläche mit einer Gitterstruktur kann ein diffraktiver Linseneffekt erzielt werden, der dem Mehrschichtkörper das gewünschte Erscheinungsbild verleiht.

Dabei ist es bevorzugt, wenn eine Periode der Gitterlinien zumindest in einem Teilbereich der Gitterstruktur weniger als 50 µm, bevorzugt weniger als 30 µm, besonders bevorzugt weniger als 15 µm beträgt.

Auf das Oberflächenrelief 51 ist eine semi-transparente Metallschicht 54 aufgebracht, bevorzugt durch Vakuumbedampfung, Sputtern oder dergleichen. Es ist dabei bevorzugt, wenn die Metallschicht aus Cr, Al, Cu, Ti, Ni, Ag oder Inconel besteht und eine Schichtdicke von 2 nm bis 20 nm, bevorzugt von 4 nm bis 15 nm aufweist.

Auf die dem Oberflächenrelief 51 abgewandte Seite der Metallschicht 54 ist nasschemisch, insbesondere mittels Tiefdruck, Vorhanggießen, Schlitzgießen oder dergleichen, eine transparente Abstandsschicht 55 aufgebracht.

Bevorzugt wird die Abstandsschicht 55 durch Aufbringen eines Lacks, insbesondere auf der Basis von Nitrocellulose-, Epoxy-, Polyester-, Kolophonium-, Acrylat-, Alkyd-, Melamin-, PVA-, PVC-, Isocyanat- oder Urethansystemen erzeugt, um so die gewünschten optischen Eigenschaften zu erzeugen.

Der Lack kann dabei weitere Zusatzstoffe, wie z.B. Vernetzer oder Tenside enthalten, um seine physikalisch-chemischen Eigenschaften, wie beispielsweise die Viskosität oder Polarität auf gewünschte und vorteilhafte Werte einzustellen.

Es ist ferner zweckmäßig, wenn zum Aufbringen der Abstandsschicht ein Lack mit einer Viskosität von 5 mPa•s bis 250 mPa•s, bevorzugt von 15 mPa•s bis 200 mPa•s und besonders bevorzugt zwischen 20 mPa•s und 170 mPa•s verwendet wird. Bezüglich der Polarität des Lackes ist es vorteilhaft, wenn die Lösemittel des Lacks zu mindestens 30% Massenanteil aus Lösemittel mit einem Polaritätsindex größer 3,0, bevorzugt mindestens 50% Massenanteil aus Lösemittel mit einem Polaritätsindex größer 3,0 bestehen. Der Polaritätsindex wird hierbei wie in Tabelle 2 der EP 2264491 A1 verstanden.

Auf der dem Oberflächenrelief 51 abgewandten Seite der Abstandsschicht 55 bildet sich dabei das Oberflächenrelief 51 der Substratfolie 53 ab. Durch die nasschemischen Beschichtungsparameter, insbesondere die Viskosität und Polarität des verwendeten Lacksystems, aber auch durch das verwendete Lacksystem und/oder das oder die Lösungsmittel kann dabei beeinflusst werden, wie stark sich das Oberflächenrelief 51 in der Oberfläche 551 der Abstandsschicht 55 abbildet.

Bevorzugt wird die Abstandsschicht 55 mit einer Nassschichtdicke von 1 µm bis 20 µm, bevorzugt von 2 µm bis 10 µm aufgebracht. Sowohl die Nass- als auch die Trockenschichtdicke beeinflussen ebenfalls die resultierende Strukturtiefe des sich in der der Replizierschicht 53 abgewandten Seite der Abstandsschicht 55 ausbildenden Reliefs 552 und damit die optischen Eigenschaften des resultierenden Dünnschichtsystems 52.

Nach dem nasschemischen Auftrag wird die Abstandsschicht 55 getrocknet, insbesondere bei einer Temperatur von 40°C bis 200°C, bevorzugt von 40°C bis 150°C. Bevorzugt liegt im Trockner der Druckmaschine ein Temperaturgradient vor, wobei die Temperatur am Anfang des Trockners zwischen 40°C und 60°C liegt und zum Ende des Trockners auf 100°C bis 150°C ansteigt. Hieraus resultiert eine kontrollierte mittlere Trockenschichtdicke von 200 nm bis 800 nm, bevorzugt von 300 nm bis 700 nm, mit dem gewünschten Grad der Korrelation zwischen den beiden Oberflächenreliefs 51, 552.

Auf die der Metallschicht 54 abgewandte Seite der Abstandsschicht 55 ist schließlich noch eine zweite Metallschicht 56, bevorzugt aus Al, Cr, Ag oder Cu mit einer bevorzugten Schichtdicke von 15 nm bis 100 nm, besonders bevorzugt von 20 nm bis 60 nm aufgetragen.

Aufgrund des nasschemischen Auftrags reduziert sich die Strukturtiefe t_{A} des in der Abstandsschicht 55 abgebildeten Oberflächenreliefs 552 merklich gegenüber der Strukturtiefe t_{R} des Oberflächenreliefs 52 im Substrat 53, d.h. t_{A} ≤ 80% t_{R}. Wie stark relaxiert, sprich abgeschwächt, die Strukturen in der zweiten Grenzfläche vorliegen, hängt u.a. von den nasschemischen Beschichtungsparametern, insbesondere der Materialbasis, der Viskosität und der Polarität des verwendeten Lacksystems, aber auch den verwendeten Lösungsmitteln ab. Auch die Nass- sowie die Trockenschichtdicke haben einen merklichen Einfluss.

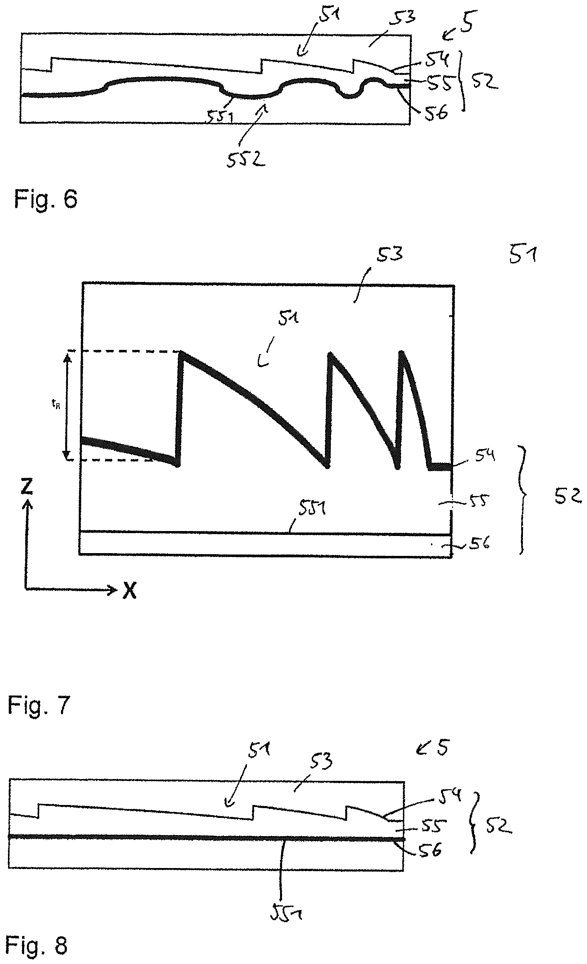

Messungen haben gezeigt, dass nicht nur die Strukturtiefe im Relief 552 der Abstandsschicht 55 abnimmt, sondern, dass sich teilweise auch die Form der Strukturen ändern kann. So zeigen mikroskopische Aufnahmen, dass beispielsweise eine an der ersten Grenzfläche - also zwischen der semi-transparenten Metallschicht 54 und der Abstandsschicht 55 - vorliegende Blazeform von Fresnelstrukturen an der zweiten Grenzfläche - also zwischen der Abstandsschicht 55 und der zweiten Metallschicht 56 - nicht nur weniger tief, sondern auch eher sinusförmig vorliegt. Dies ist schematisch in Fig. 6 dargestellt.

Aufgrund dieser Formnivellierung und/oder der abnehmenden Korrelation zwischen den beiden Oberflächenreliefs 51, 552 kann die Dicke der Abstandsschicht relativ stark schwanken, was dann zu einer erheblichen Abschwächung des Farbkontrastes führt. Da der Farbeindruck direkt von der Schichtdicke der Abstandsschicht 55 beeinflusst wird, resultiert eine solche relativ stark schwankende Schichtdicke in einem stark schwankenden Farbeindruck in einer lateralen Ausdehnung in der Größe der Gitterperiode und damit unterhalb der Auflösungsgrenze des menschlichen Auges.

Beispielsweise ergibt eine Schichtdicke der gedruckten Abstandsschicht 55 (Brechungsindex n=1,5) von 425 nm bei einem Betrachtungswinkel von 30° einen roten, mit einer Dicke von 350 nm einen grünen und mit einer Dicke von 300 nm einen blauen Farbeindruck. Die Mischfarbe einer derartigen Abstandsschicht 55 mit unterhalb der Auflösungsgrenze des menschlichen Auges stark schwankender Schichtdicke erscheint deshalb für das menschliche Auge meist dunkel Grau bzw. metallisch Grau. Die stark schwankende Schichtdicke der Abstandsschicht 55 liegt hauptsächlich in Bereichen der Reliefstruktur 51, 552 mit feiner Gitterperiode vor. Es ergibt sich in diesem Fall ein Gradient von Farbe in Bereichen mit grober Periode der Reliefstruktur zu Grau/Achromatisch in Bereichen mit feiner Periode der Reliefstruktur. Da der Gradient durch die Strukturen des Oberflächenreliefs 51 erzeugt wird, ist der Farbe-zu-Grau Gradient im perfekten Register zu dem 3D-Eindruck bzw. der dreidimensionale Oberflächenform der Reliefstrukturen 51, 552.

Die starke Schwankung der Schichtdicke der Abstandsschicht 55 liegt hauptsächlich in Gebieten vor in welchen die Periode der Oberflächenrelief-Mikrostrukturen klein - sprich ≤50µm, bevorzugt ≤30µm insbesondere ≤20µm - ist. Durch die resultierende Variation der Schichtdicke der Abstandsschicht 55 ergibt sich ein Farbe-zu-Grau-Gradient, wobei der grau erscheinende Bereich typischerweise beginnt, wenn die Periode der Oberflächenrelief-Mikrostrukturen ≤50µm, bevorzugt ≤30µm insbesondere ≤20µm ist. Der Farbe-zu-Grau-Gradient hebt die Freiformfläche optisch deutlich hervor.

Typischerweise wird die Periode der Mikrostrukturen zum Rand der Freiform hin kleiner, weshalb der Farbe-zu-Grau Gradient meist vom Zentrum der Freiform zum Rand hin verläuft.

Neben einem Farbverlauf oder Farbgradienten von einer ersten Farbe zu einem grauen bzw. metallischen Eindruck ist es auch möglich, einen Verlauf von einer ersten zu einer zweiten Farbe zu realisieren. Hierfür ist es bevorzugt, dass die Korrelation der zwei Grenzflächen der Abstandsschicht 55 sehr gering ist, sprich, dass t_{A} ≤ 50% t_{R} und insbesondere t_{A} ≤ 30% t_{R}. Im Extremfall ist die zweite Grenzfläche zur zweiten Metallschicht hin sogar nahezu glatt ausgebildet, bzw. die Korrelation zwischen den Oberflächenreliefs 51, 552 (nahezu) komplett aufgehoben. Dies ist eine extreme Form der Formänderung, bzw. Formnivellierung. Die Figuren 7 und 8 zeigen dies in schematischen nicht maßstabsgetreuen Seitenansichten.

Insbesondere bei einem Lacksystem, welches zu einer Entkopplung der Grenzflächen führt, kann neben der Formänderung bzw. Formnivellierung noch ein weiterer Effekt auftreten. Vermutlich Kapillarkräfte, welche von den Relieffurchen ausgehen, drängen beim Trocknungsprozess der nasschemisch aufgebrachten Abstandsschicht 55 Material der Abstandsschicht 55 in Richtung größerer Periode der Strukturen des Oberflächenreliefs - sprich typischerweise Richtung Zentrum der Relief-Form bzw. der gewünschten Freiformfläche. Ferner wird wohl auch Material der Abstandsschicht 55 in Richtung von, das Oberflächenrelief umgebenden, Spiegelflächen oder auch umgebenden Flächen mit flacheren anderen Strukturen gedrängt. Ein Beispiel für diese anderen Strukturen sind Diffraktionsgitter mit Perioden unter 2 µm und Gittertiefen unter 200 nm. Dadurch ist die Schichtdicke im Zentrum der Freiformfläche, bzw. in Bereichen mit grober Periode Δx sowie in den, das Oberflächenrelief umgebenden, Bereichen größer als am Rand der Freiformfläche, bzw. in Bereichen mit kleinerer Periode Δx der Reliefstrukturen. In Bereichen mit relativ großer lokaler Periode Δx der Relief-Strukturen ist die Schichtdicke nahezu gleich zu der Dicke in Bereichen ohne Strukturen, d.h. auf glatter Oberfläche bzw. nahezu gleich zu der Dicke in Bereichen mit flacheren anderen Strukturen. Der Farbgradient ist kontinuierlich und im perfekten Register zu der Form des Oberflächenreliefs. Der Farbgradient hebt dadurch die Freiformfläche optisch deutlich hervor. Typischerweise fängt der Bereich mit der zweiten Farbe an, wenn die Periode der Oberflächenrelief-Mikrostrukturen ≤30µm, bevorzugt ≤20µm insbesondere ≤15µm ist.

Mehrschichtkörper nach Art der Erfindung, welche einen Gradienten von einer ersten Farbe zu einer zweiten Farbe besitzen, könne sogar zwei verschiedene Farbeffekte in dem Bereich mit dem Oberflächenrelief in Form einer Freiformfläche aufweisen. So kann beispielsweise in dem Bereich mit grober Periode Δx ein Farbeffekt von Rot bei nahezu senkrechter Betrachtung zu Grün bei gekippter Betrachtung (z.B. 30°) vorliegen. Gleichzeitig kann in dem Bereich mit feiner Periode Δx ein Farbeffekt von Grün bei nahezu senkrechter Betrachtung zu Blau bei gekippter Betrachtung (z.B. 30°) vorliegen.

Insgesamt kann also sowohl ein Farbe-zu-Grau- als auch eine Farbe-zu-Farbe-Verlauf realisiert werden.

Ein Farbverlauf von einer ersten Farbe zu einem metallischen / grauen / achromatischen Eindruck tritt auf wenn, die Relaxation weniger als 50% ist, d.h. wenn t_{A} ≥ 50% t_{R}. Gleichzeitig muss aber gelten t_{A} ≤ 90% t_{R} und bevorzugt t_{A} ≤ 80% t_{R}. In anderen Worten, wenn die Strukturtiefe an der Grenzfläche zwischen der Abstandsschicht und der zweiten Metallschicht zwischen 50% bis 90%, bevorzugt 50% bis 80% der Strukturtiefe an der Grenzfläche zwischen der Abstandsschicht und der ersten Metallschicht liegt, resultiert ein Farbe/Grau-Gradient.

Ein Farbverlauf von einer ersten zu einer zweiten Farbe tritt vor allem dann auf wenn die Strukturtiefe mehr als 50% relaxiert, d.h. wenn t_{A} ≤ 50% t_{R}. Bevorzugt ist t_{A} ≤ 40% t_{R}, weiter bevorzugt t_{A} ≤ 30% t_{R} und insbesondere bevorzugt t_{A} ≤ 20% t_{R}. In anderen Worten, wenn die Strukturtiefe an der Grenzfläche zwischen der Abstandsschicht und der zweiten Metallschicht 55 kleiner/gleich 50%, bevorzugt kleiner/gleich 40%, besonders bevorzugt kleiner/gleich 30% und insbesondere kleiner/gleich 20% der Strukturtiefe an der Grenzfläche zwischen der Abstandsschicht und der ersten Metallschicht liegt, resultiert ein Gradient zwischen zwei Farben.

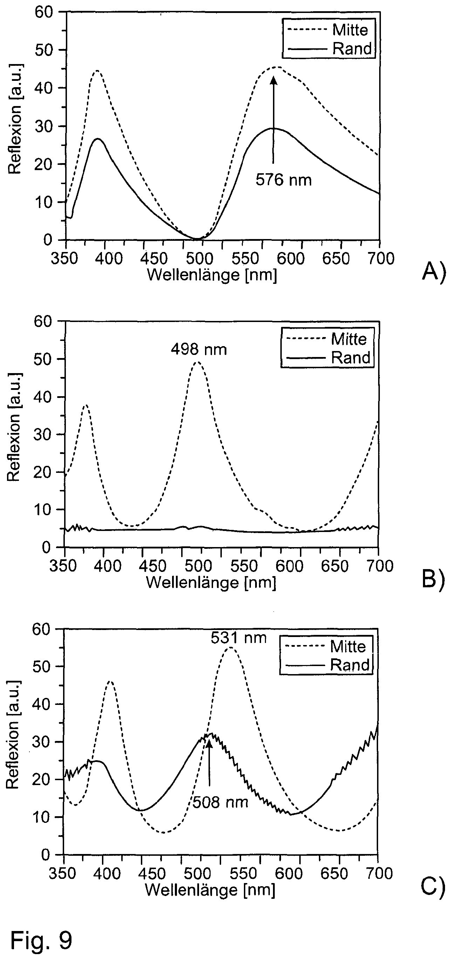

Die beschriebenen Fälle lassen sich mittels Spektrometermessungen unterscheiden. Fig. 9A bis 9C zeigt Beispiele von gemessen Spektren bei senkrechtem Einfall - sprich bei α=0° - für den in Fig. 4 gezeigten Fall sehr starker Korrelation der Grenzflächen bei einer vakuumtechnisch aufgebrachten Abstandsschicht nach dem Stand der Technik (Fig. 9A), den in Fig. 5 gezeigten Fall abgeschwächter Korrelation der Oberflächenreliefs bei nasschemischem Auftrag der Abstandsschicht (Fig. 9B) und den in Fig. 7 gezeigten Fall sehr geringer Korrelation der Oberflächenreliefs bei ebenfalls nasschemischem Auftrag der Abstandsschicht (Fig. 9C). Es ist je ein Spektrum im Bereich mit grober Periode des Oberflächenreliefs (Mitte, strichlinierter Graph) und je eines im Bereich mit Farbgradient bzw. im Bereich mit kleiner Periode der Oberflächenreliefs (Rand, durchgängiger Graph) gezeigt.

Wie in Fig. 9A gezeigt, folgen die Spektren im Mitten- und Randbereich des Oberflächenreliefs bei einer aufgedampften Abstandsschicht im Wesentlichen dem gleichen Verlauf - sprich die Peakmaxima und -minima liegen bei der gleichen Wellenlänge. Das Dünnschichtsystem erscheint daher über den gesamten Bereich der Freiformfläche einfarbig. Die etwas reduzierte Reflexion im Randbereich liegt unter anderem daran, dass das Oberflächenrelief im Randbereich einen Teil des Lichts stärker aus der Blickrichtung des Spektrometers beugt als im Mittebereich.

In Fig. 9B ist zu erkennen, dass im Bereich des Oberflächenreliefs 51 ein Gradient von einer ersten Farbe (Mitte, strichlinierter Graph) zu einem grau/metallischen Eindruck (Rand, durchgängiger Graph) vorliegt, wobei die Differenz ΔR zwischen dem Maximum Rₘₐₓ und dem Minimum Rₘᵢₙ der bei senkrechtem Einfall gemessenen Reflexion im Spektralbereich von 430nm bis 690nm im Bereich der ersten Farbe mindestens 3x, bevorzugt mindestens 5x und insbesondere bevorzugt mindestens 7x größer ist als im Bereich mit dem grau/metallischen Eindruck.

Im Fall von Fig. 9C ist zu erkennen, dass im Bereich des Oberflächenreliefs 51 ein Gradient von einer ersten (Mitte, strichlinierter Graph) zu einer zweiten Farbe (Rand, durchgängiger Graph) vorliegt, wobei die zwei, zu den Farben gehörenden und bei senkrechtem Einfall gemessenen, Reflexionsspektren eine Verschiebung der Wellenlänge Δλ mindestens eines der Reflexionspeaks von mindestens 10nm bevorzugt mindestens 20nm und insbesondere mindestens 30nm aufweisen. Dieser Reflexionspeak liegt hierbei üblicherweise im Spektralbereich von 430nm bis 690nm. Die Verschiebung der Peakwellenlänge ist in dem in Fig. 9c gezeigten gemessenen Beispiel Δλ = 531 nm - 508 nm = 23 nm.

Anstelle der bislang beschriebenen Fabry-Perot-Systeme können auch andere Dünnschichtsysteme zum Einsatz kommen, z.B. HLH-Systeme (HLH, LHL, HLHL, LHLH, etc.). Ein konkretes Beispiel hierfür ist eine Bedampfung der replizierten Oberflächenstruktur mit einer Schicht aus hochbrechendem Material (H, H für Hoher Brechungsindex bzw. High refractive Index), z.B. 80nm TiO₂ mit n ≈ 2.54 bei λ = 589 nm, ZrO₂ oder ZnS. Anschließend wird nasschemisch eine eher niedrigbrechende Abstandsschicht (L, L für Niedriger Brechungsindex bzw. Low refractive Index) der Dicke d aufgebracht, z.B. 500nm PVC-Lack mit n = 1,545 bei λ = 589 nm. Diese Schicht erzeugt den Wegunterschied für die Interferenz der Lichtanteile. In dieser Abstandsschicht liegen die Strukturen in der zweiten Grenzfläche wieder relaxiert vor, was zu einem Gradienten führt. Als dritte Schicht wird wieder eine Schicht aus hochbrechendem Material (H), z.B. 80nm TiO₂, ZrO₂ oder ZnS, aufgebracht, z.B. gedampft. Bevorzugt ist die Dicke der hochbrechenden Schichten im Bereich von 10 nm bis 200 nm und insbesondere zwischen 20 nm und 100 nm. Auch ein derartiges Dünnschichtsystem erzeugt in Zusammenspiel mit den Reliefstrukturen einen Farbeindruck mit Farbverlauf bzw. Farbgradient. Der Vorteil eines solchen Dünnschichtsystems ist, dass es transparent ist und somit beispielsweise in ID-Dokumenten auch über kritischen, insbesondere personalisierten und/oder individualisierten Daten platziert werden kann.

Der Farbverlauf der bisher beschriebenen Mehrschichtkörper 5 lässt sich noch mittels Farbfilter modifizieren, welche sich, vom Betrachter aus gesehen, oberhalb des Dünnschichtstapels befinden. Beispielsweise können in dem Schichtstapel eine oder mehrere Schichten eingefärbt sein.

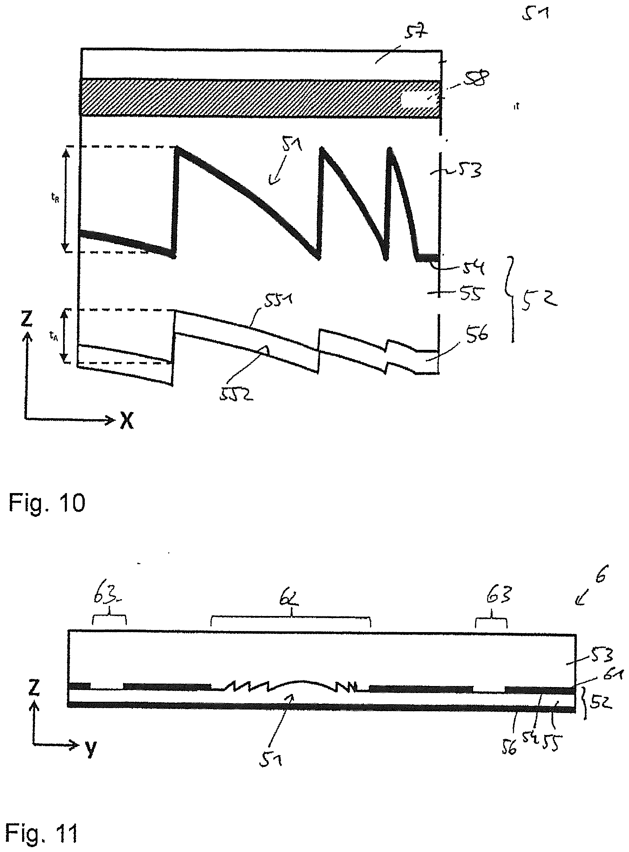

Fig. 10 zeigt in einer schematischen Seitenansicht das Beispiel eines eingefärbten Mehrschichtkörpers 5. Der Schichtaufbau entspricht dem in Fig. 5 gezeigten. Zwischen der Replizierschicht 53 und der Substratfolie 57 ist dabei eine zusätzliche eingefärbte Lackschicht 58 mit einer bevorzugten Schichtdicke von 200 nm bis 5 µm vorgesehen. Alternativ kann die Oberflächenreliefstruktur 51 aber auch in einen eingefärbten Replizierlack 53 repliziert werden. Der Farbeindruck des Oberflächenreliefs 51 wird in all diesen Fällen mit dem Farbeindruck des Farbfilters 58 überlagert.

Ein konkretes Beispiel ist eine sogenannte Goldfolie, welche einen indirekt oder direkt gelb eingefärbten Replizierlack 53 aufweist. In einer derartigen Folie würde der beispielsweise bei einem Betrachtungswinkel von 30° tiefrote Hintergrund sowie der tiefrote Bereich des Oberflächenreliefs mehr orange erscheinen. Der Chrom-metallische Randbereich des Oberflächenreliefs hingegen würde dunkelgelb wirken. Der Farbgradient wäre demnach nicht mehr tiefrot zu chrom-metallisch, sondern orange zu gelb.

Ein konkretes Beispiel für die Integration der Kombination aus Oberflächenrelief 51 in Form einer Freiformfläche und Dünnschichtsystem 52 nach Art der Erfindung in ein Sicherheitselement 6 mit einem KINEGRAM® ist in Fig. 11 dargestellt.

Hierbei wird ein KINEGRAM-Design repliziert und vollflächig mit einer ersten Aluminiumschicht 61 bedampft. Anschließend wird in einem Standard-Demetallisierungsprozess im Register das Aluminium in dem Bereich 62 mit dem Oberflächenrelief 51 sowie in den Bereichen 63, wo der Dünnschichteffekt sonst noch zu sehen sein soll, entfernt. Anschließend wird auf der vom Betrachter gesehenen Rückseite der ersten Aluminiumschicht 61 das Dünnschichtsystem 52 aufgebracht, welches den bereits beschriebenen Ausführungsbeispielen entspricht.

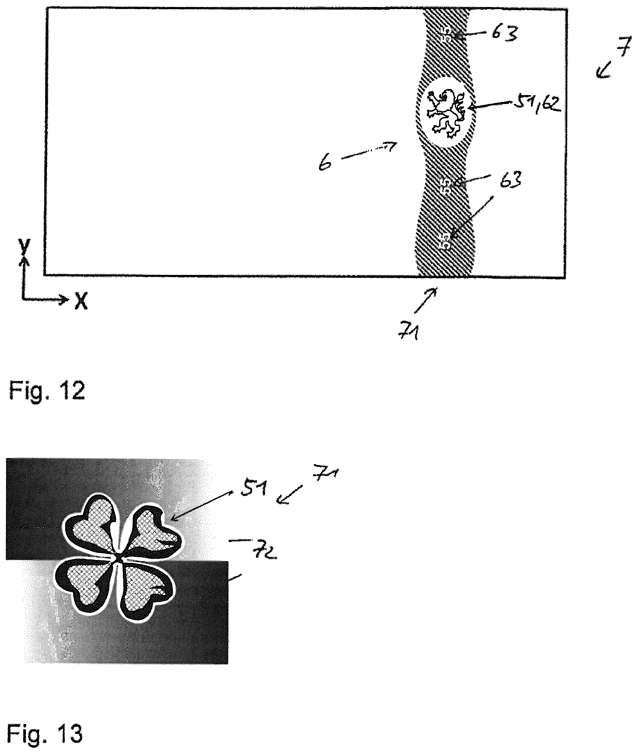

Eine beispielhafte Musterbanknote 7 mit einem derartigen Demetallisierungs-Design zeigt Fig. 12. Ein Sicherheitsstreifen 71 beinhaltet u.a. ein Oberflächenrelief 51, welches eine Freiformfläche in Löwenform darstellt und welches einen der beschriebenen Farbgradienten aufweist. Dieses Oberflächenrelief 51 liegt in einem demetallisierten Bereich 62 des Streifens vor. Der restliche Streifen weist noch andere Effekte, z.B. diffraktive Effekte, auf. Ferner beinhaltet der Streifen drei demetallisierte Bereiche 63 in Form der Zahl "55", wobei auch in diesen demetallisierten Bereichen das Fabry-Perot-Dreischichtsystem 52 vorliegt. Die drei Zahlen "55" zeigen folglich den gleichen bzw. einen sehr ähnlichen Farbkippeffekt wie er in dem Oberflächenrelief 51 in Bereichen mit grober Periode auch vorliegt. Alternativ kann der Farbeffekt in den Bereichen 63 ein anderer als im Bereich 62 sein. Hierfür muss lokal eine andere Dicke der Abstandsschicht 55 vorliegt. In Druckprozessen ist es einfach möglich, gezielt lokal unterschiedliche Dicken zu erzeugen. Dies kann z.B. durch unterschiedliche Tiefe der Näpfchen in einer Tiefdruckwalze in den Bereichen der Walze, welche die Abstandschicht auf die Bereiche 62 und 63 auftragen, erzielt werden.

Eine weitere Alternative sieht vor, dass zusätzlich in den Bereichen 63 mittels eines oder mehrerer weiterer Demetallisierungsschritte die Metallschichten des Dünnschichtsystems 52 entfernt werden. Dies kann z.B. über einen sogenannten Lift-off-Prozess erreicht werden. In diesem Fall liegt ein Farbeffekt in dem Bereich 62 vor, wohingegen in den Bereichen 63 das Substrat ungestört von Metallschichten zu sehen ist.

Fig. 13 zeigt eine schematische Draufsicht auf ein solches Sicherheitselement 71 im Detail. Der Farbverlauf im Bereich des Oberflächenreliefs 51 ist dabei durch Konturlinien veranschaulicht. Der Hintergrund für das vom Oberflächenrelief 51 gebildete Motiv wird von metallisierten Flächen 72 gebildet.

Der Farbeffekt des Oberflächenreliefs 51 in Form einer Freiformfläche kann wie zuvor beschrieben von der Vorderseite des Substrates zu sehen sein, sprich von der Seite, auf welche der Mehrschichtkörper aufgebracht ist. Alternativ kann der Schichtaufbau auch so gestaltet werden, dass der Farbeffekt durch ein Fenster in dem Sicherheitsdokument, auf welches der Mehrschichtkörper aufgebracht wird, zu sehen ist. In anderen Worten sieht ein Betrachter den Farbeffekt des Oberflächenreliefs, wenn er die Rückseite des Sicherheitsdokumentes betrachtet. Gleichzeitig kann der Mehrschichtkörper so gestaltet sein, dass der Betrachter auf der Vorderseite des Sicherheitsdokumentes das Oberflächenrelief 51 in Form einer Freiformfläche in einer metallisch reflektierenden und räumlich gespiegelten Form sieht. Die Spiegelung kann hierbei nicht nur eine links/rechts Spiegelung sein. Zusätzlich kann auch die Freiformfläche auf der einen Seite des Sicherheitsdokumentes vorgewölbt erscheinen und auf der anderen Seite optisch scheinbar zurückspringen. Dies erhöht den Wiedererkennungswert und damit die Identifikationswirkung zusätzlich.

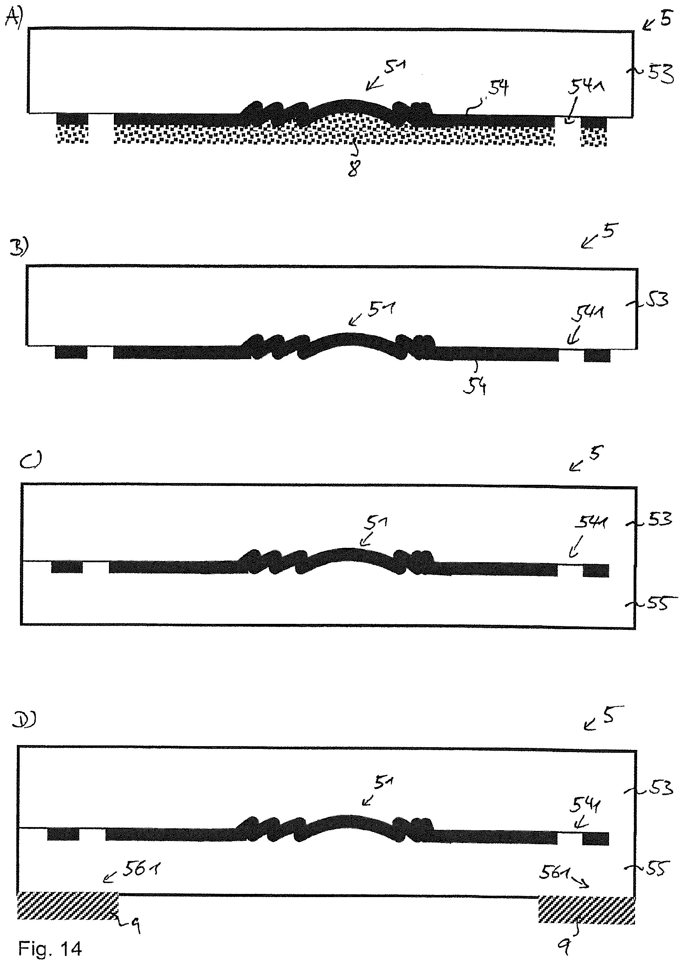

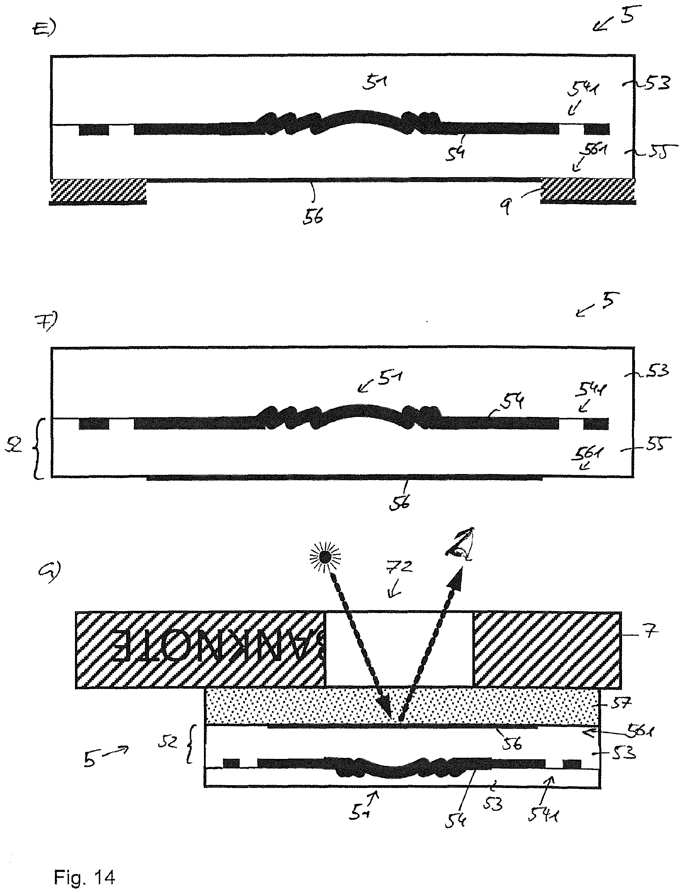

Fig. 14 zeigt ein alternatives Verfahren zur Herstellung eines Mehrschichtkörpers 5 mit partieller Demetallisierung der Metallschichten 54, 56. Auf die Substratfolie 53 mit einem Oberflächenrelief 51 der beschriebenen Art wird auch hier, wie bereits erläutert eine erste Metallschicht 54 aufgebracht. In diesem Ausführungsbeispiel ist die erste Metallschicht 54 als opake Spiegelschicht ausgebildet. Diese wird mit einem Ätzresist 8 überdruckt, der in zu demetallisierenden Bereichen 541 ausgespart bleibt. In diesen Bereichen 541 kann die Metallschicht 54 dann durch Ätzen entfernt werden (Fig. 14A).

Nach dem Ätzen kann der Ätzresist 8 durch geeignete Lösemittel wieder entfernt werden (Fig. 14B) und die freigelegte Metallschicht 54 mit der transparenten Abstandsschicht überdruckt werden (Fig. 14C).

Vor dem Auftrag der zweiten Metallschicht 56 wird auf die Abstandsschicht 55 ein Lift-Off-Lack 9 in denjenigen Bereichen 561 aufgetragen, in denen die zweite Metallschicht 56 später entfernt werden soll (Fig. 14D). Die zweite Metallschicht 56 wird dann vollflächig aufgebracht (Fig. 14E). In diesem Beispiel ist die zweite Metallschicht semi-transparent ausgebildet. Beim Entfernen des Lift-Off-Lacks 9 durch ein geeignetes Lösemittel wird in den Bereichen 561 die zweite Metallschicht 56 ebenfalls mit entfernt (Fig. 14F).

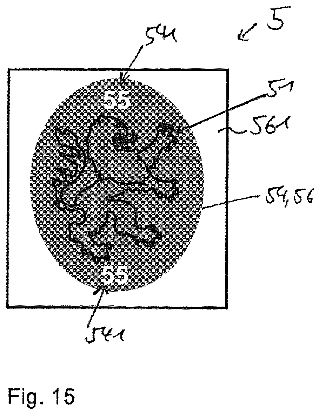

Man erhält somit demetallisierte Bereiche 541 und 561 in den beiden Metallschichten, die sich überlappen und die ein Motiv ausbilden können. In den demetallisierten Bereichen 541 und 561 liegt dabei kein Dünnschichteffekt vor. Bringt man den Mehrschichtkörper 5 mittels einer geeigneten Kleberschicht 57 auf ein Sicherheitsdokument, beispielsweise eine Banknote 7 auf (Fig. 14G), so erlauben die demetallisierten Bereiche den Blick auf das Substrat der Banknote. Der demetallisierte Bereich 541 bildet dabei, wie in Fig. 15 zu erkennen, die Zahl "55" aus, während der demetallisierte Bereich 561 das Oberflächenrelief umrahmt.

Der Bereich des Oberflächenreliefs 51 ist über einem Fenster 72 der Banknote angeordnet, so dass der Effekt des Oberflächenreliefs 51 mit dem durch das Dünnschichtsystem 52 erzeugten Farbwechseleffekt von der anderen Seite der Banknote 7 zu erkennen ist. Die demetallisierten Bereiche 541 und 561 werden bei der Betrachtung durch das Fenster 72 dagegen vom Substrat der Banknote 7 verdeckt.

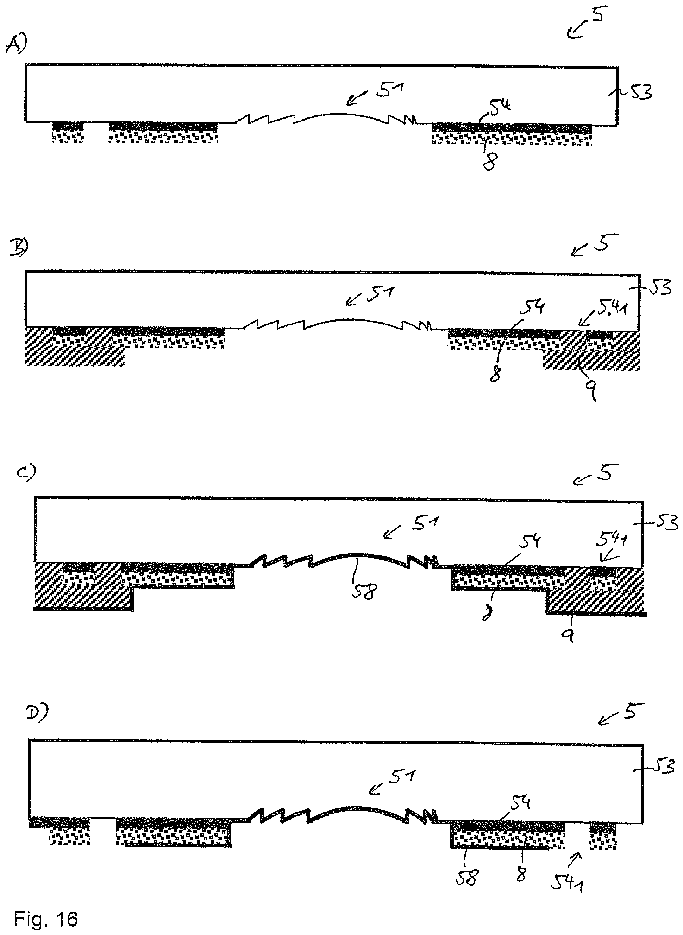

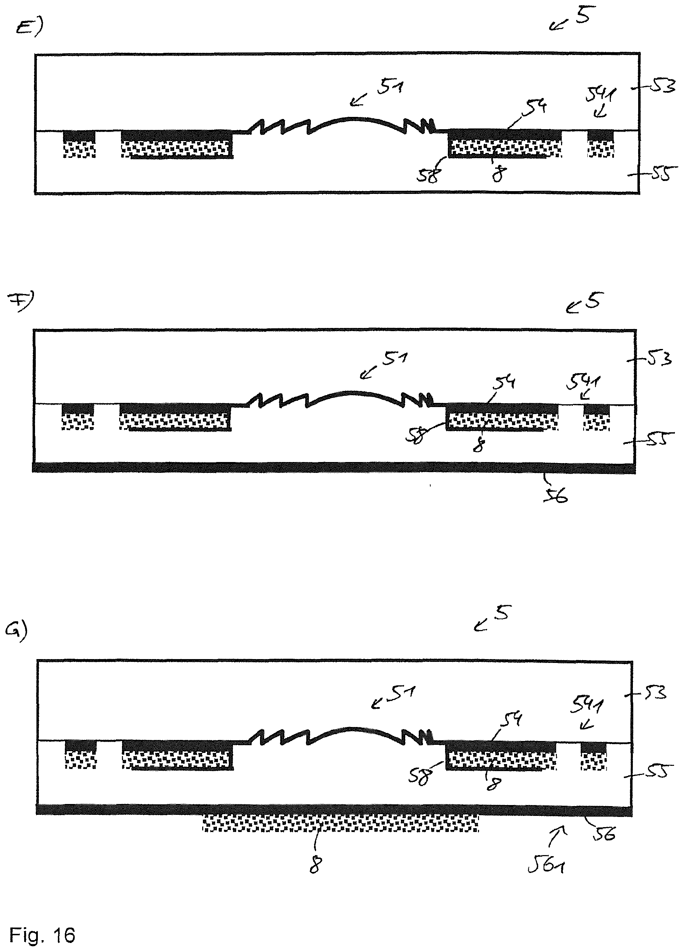

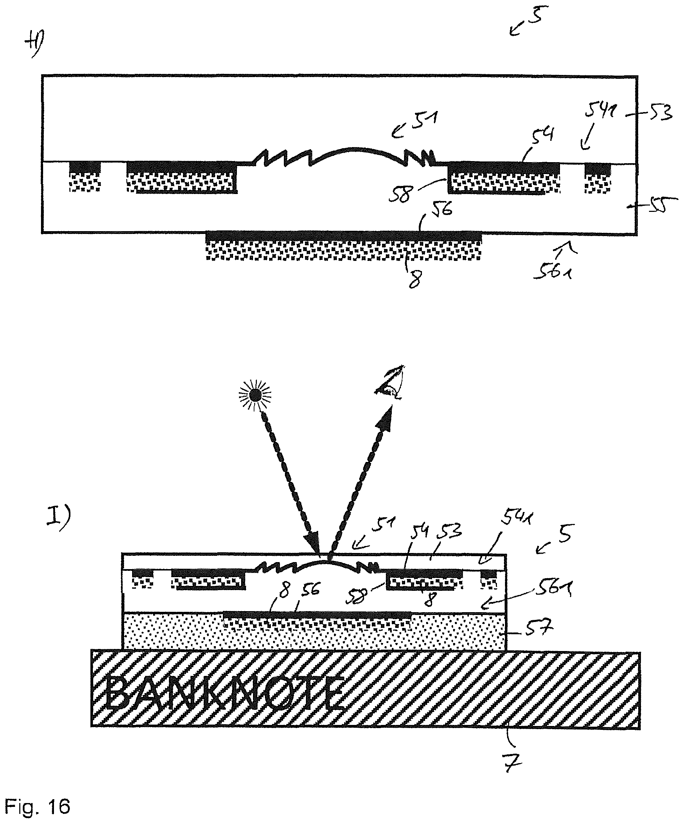

Fig. 16 zeigt ein weiteres alternatives Verfahren zur Herstellung eines Mehrschichtkörpers 5 mit partieller Demetallisierung der Metallschichten 54, 56. Auf die Substratfolie 53 mit einem Oberflächenrelief 51 der beschriebenen Art wird auch hier, wie bereits erläutert eine erste Metallschicht 54 aufgebracht. Diese wird mit einem Ätzresist 8 überdruckt, der in zu demetallisierenden Bereichen 541 ausgespart bleibt. In diesen Bereichen 541 kann die Metallschicht 54 dann durch Ätzen entfernt werden (Fig. 16A). Zusätzlich bleibt hier auch der Bereich des Oberflächenreliefs 51 zunächst ausgespart. Der Ätzresist 8 wird in dieser Ausführungsform nicht entfernt und kann zusätzliche dekorative Funktionen übernehmen.

In den auszusparenden Bereichen 541 wird nun ein Lift-Off-Lack 9 aufgedruckt (Fig. 16B). Anschließend wird eine weitere, semi-transparente Metallschicht 58, bevorzugt aus Chrom, vollflächig aufgedampft (Fig. 16C) und durch Ablösen des Lift-Off-Lacks 9 in den Bereichen 541 wieder entfernt (Fig. 16D). Damit ist nun auch der Bereich des Oberflächenreliefs 51 metallisiert.

Analog zu den bereits beschriebenen Verfahren wird nun die Abstandsschicht 55 aufgebracht (Fig. 16E) und vollflächig mit Metall bedampft (Fig. 16F). Auf die so erzeugte, in diesem Ausführungsbeispiel opake, zweite Metallschicht 56 wird wieder partiell ein Ätzresist 8 aufgedruckt (Fig. 16G) und die Metallschicht 56 in den ausgesparten Bereichen 561 durch Ätzen entfernt (Fig. 16H). Auch hier überlappen die Bereiche 541 und 561 wieder.

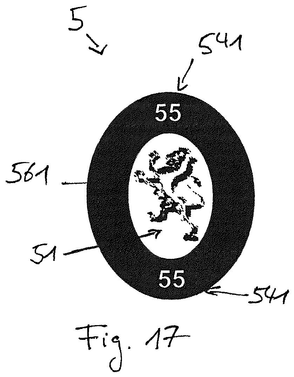

Der Mehrschichtkörper kann nun wieder mittels einer Kleberschicht 57 auf eine Banknote 7 aufgebracht werden (Fig. 16I). In dieser Ausführungsform ist die Substratfolie 53 entfernt (Heißprägevariante) und kein Fenster vorgesehen. Der Mehrschichtkörper 5 zeigt den gewünschten Effekt bei direkter Betrachtung von der Seite der Substratfolie 53 her. Wie in Fig. 17 zu erkennen, bildet der demetallisierte Bereich 541 wieder die Zahl "55" aus. Der demetallisierte Bereich 561 bildet eine Umrahmung für das Oberflächenrelief 51, welche allerdings von der Metallschicht 54 überdeckt wird. Die ovale Form des Mehrschichtkörpers kann erzeugt werden, indem der Mehrschichtkörper 5 mittels Heißprägen mit einem der ovalen Außenkontur entsprechend geformten Heißprägestempel auf die Banknote 7 appliziert wird. Dabei werden die übrigen Schichten des Mehrschichtkörpers 5 von der Substratfolie 53 nur in dem Bereich abgelöst und gemeinsam als Transferlage auf die Banknote 7 appliziert, wo der ovale Heißprägestempel auf die Substratfolie 53 mittels Druck und Hitze einwirkt und dabei die bevorzugt als hitzeaktivierbare Kleberschicht ausgebildete Kleberschicht 57 des Mehrschichtkörpers 5 aktiviert.

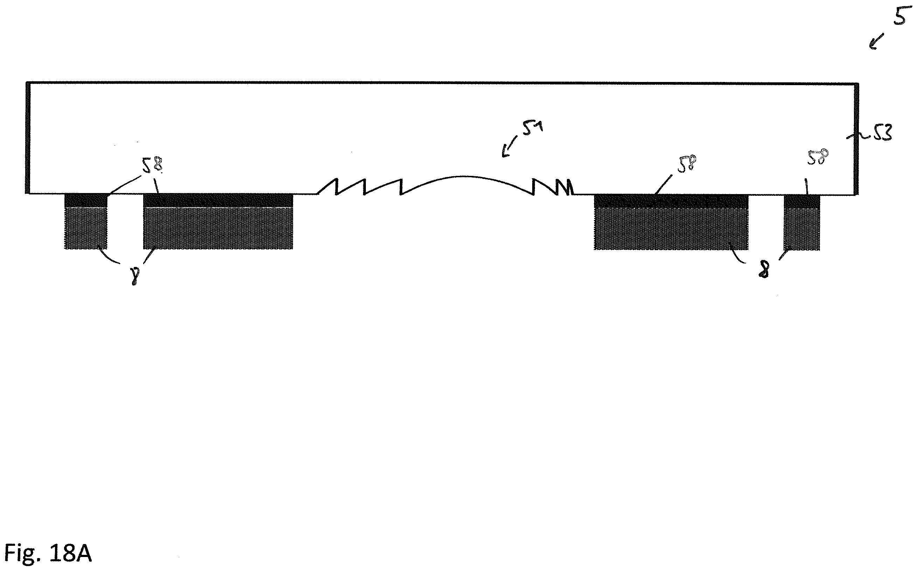

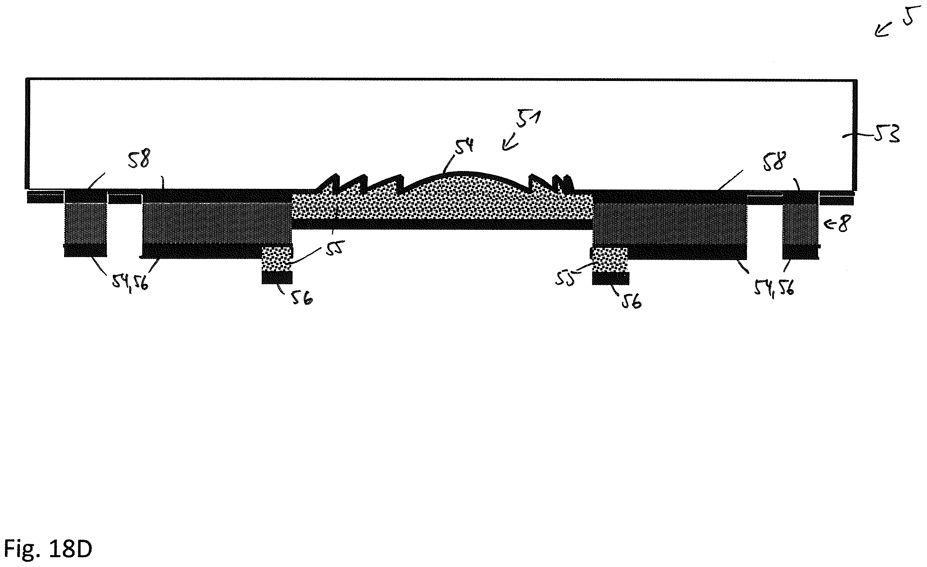

Ein weiteres Verfahren zur Herstellung eines Mehrschichtkörpers 5 mit partieller Demetallisierung der Metallschichten ist in Fig. 18A bis 18G in schematischen - nicht maßstabsgetreuen - Seitenansichten dargestellt.

Auf die Substratfolie 53 mit einem Oberflächenrelief 51 der beschriebenen Art wird auch hier eine opake Metallschicht 58 aufgebracht. Diese wird mit einem Ätzresist 8 überdruckt, der in zu demetallisierenden Bereichen ausgespart bleibt. In diesen Bereichen kann die Metallschicht 58 dann durch Ätzen entfernt werden (Fig. 18A). Zusätzlich bleibt hier auch der Bereich des Oberflächenreliefs 51 zunächst ausgespart. Der Ätzresist 8 wird in dieser Ausführungsform nicht entfernt und kann zusätzliche dekorative Funktionen übernehmen.

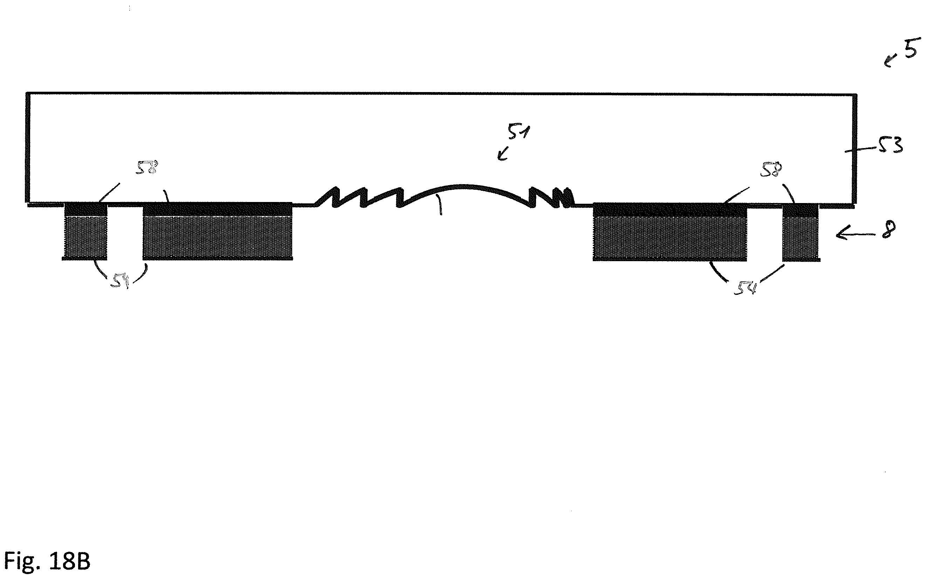

Als nächstes wird eine erste Metallschicht 54 durch Bedampfen unter Vakuum aufgebracht (Fig. 18B). Diese erste Metallschicht 54 bedeckt u.a. das Oberflächenrelief 51. Diese erste Metallschicht 54 ist in diesem Ausführungsbeispiel semi-transparent ausgebildet.

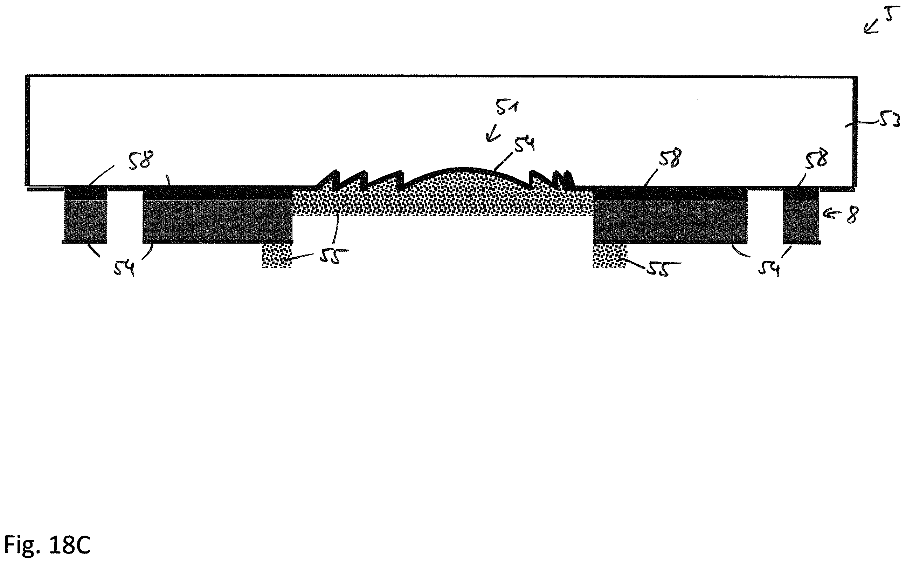

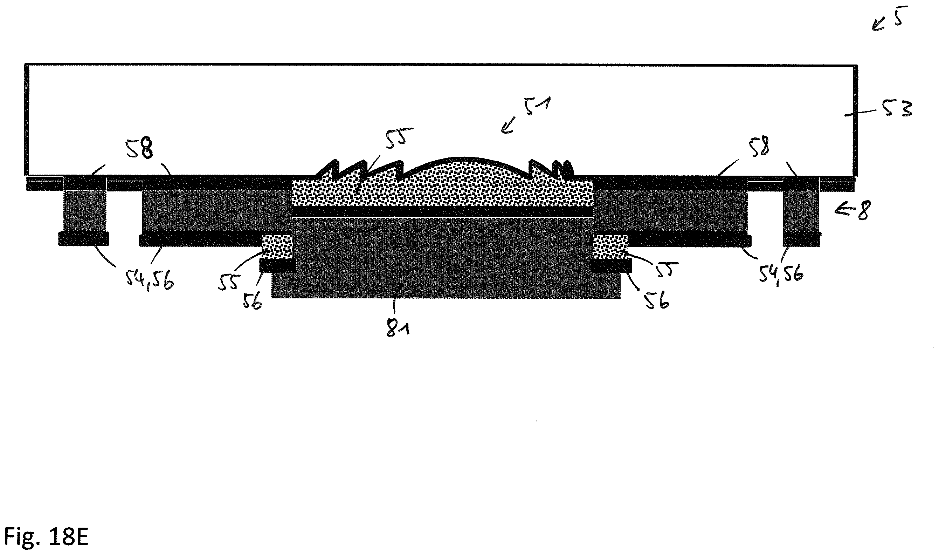

Anschließend wird nun die Abstandsschicht 55 partiell und im Passer zu dem Oberflächenrelief 51 aufgebracht (Fig. 18C) und vollflächig mit der zweiten Metallschicht 56 bedampft (Fig. 16D). Diese zweite Metallschicht 56 ist opak ausgebildet. In Bereichen, welche nicht mit der partiellen Abstandsschicht 55 versehen sind, liegt die zweite Metallschicht 56 direkt auf der ersten Metallschicht 54. Auf die so erzeugte, in diesem Ausführungsbeispiel opake, zweite Metallschicht 56 wird wieder partiell und im Passer ein Ätzresist 81 aufgedruckt (Fig. 18E).

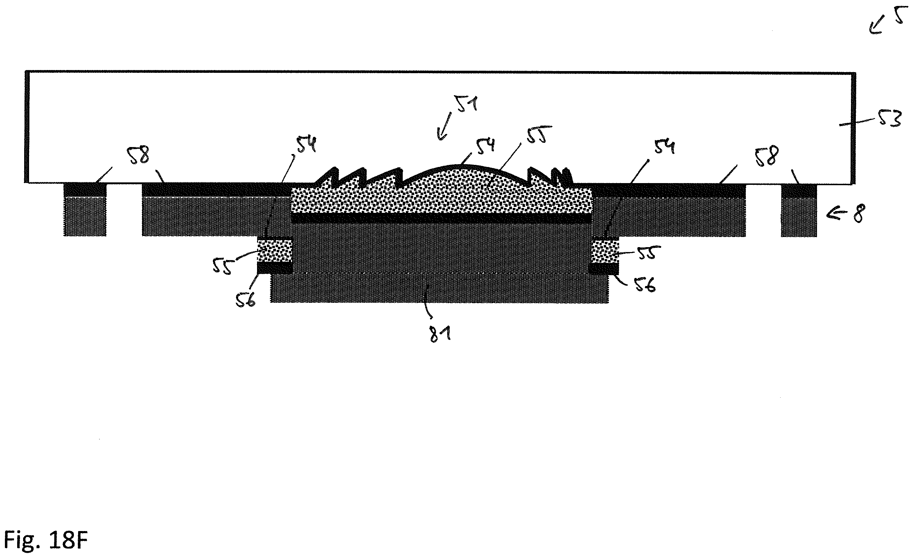

In den ausgesparten Bereichen werden anschließend durch Ätzen die erste 54 und die zweite Metallschicht 56 in einem Schritt entfernt (Fig. 18F). Hierfür müssen die erste 54 und die zweite Metallschicht 56 aus Metallen bestehen, welche mit der gleichen Ätzlösung entfernt werden können. Bevorzugt bestehen beide Metallschichten aus dem gleichen Metall, insbesondere bevorzugt bestehen beide Metalle aus Aluminium oder Kupfer.

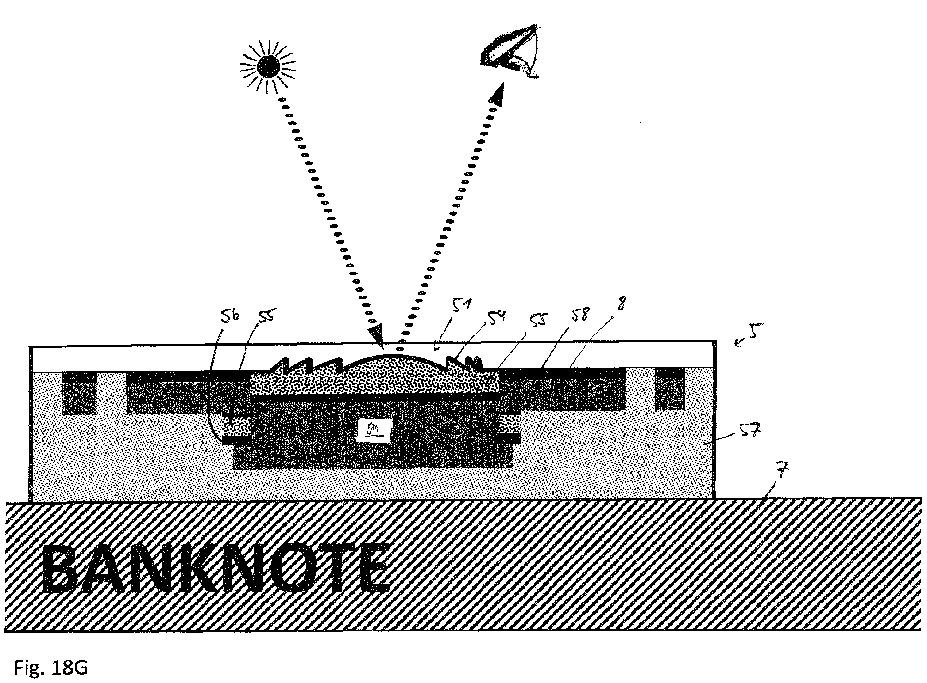

Der Mehrschichtkörper 5 kann nun wieder mittels einer Kleberschicht 57 auf eine Banknote 7 aufgebracht werden (Fig.18G). Auch in dieser Ausführungsform ist die Substratfolie 53 entfernt (Heißprägevariante) und kein Fenster vorgesehen. Der Mehrschichtkörper 5 zeigt den gewünschten Effekt bei direkter Betrachtung von der Seite der Substratfolie her. Das Verfahren kommt, für dieses kombinierte Design mit metallischen Bereichen mit z.B. diffraktiven Effekten und Bereichen mit dem Farbkippeffekt, mit zwei Demetallisierungsschritten aus.

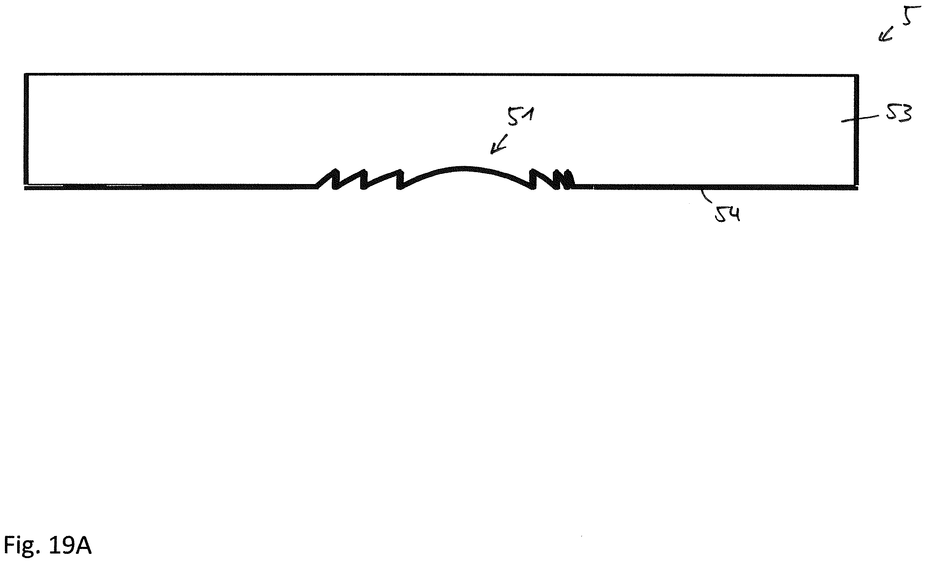

Ein weiteres Verfahren zur Herstellung eines Mehrschichtkörpers mit partieller Demetallisierung der Metallschichten ist in Fig. 19A bis 19F in schematischen - nicht maßstabsgetreuen - Seitenansichten dargestellt.

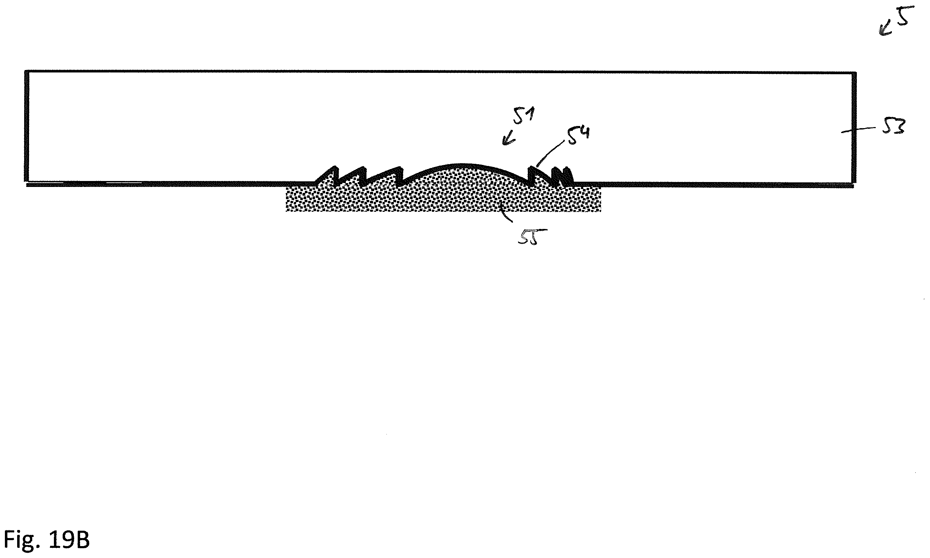

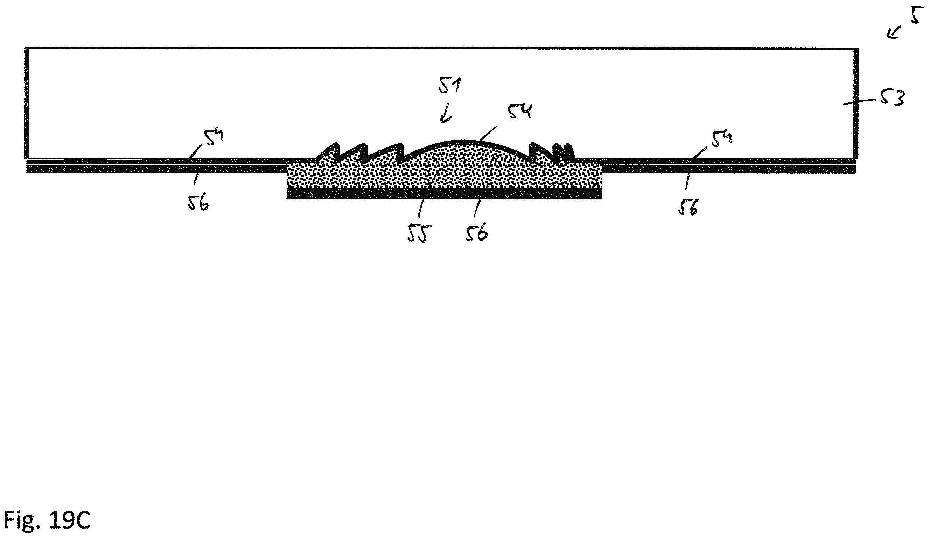

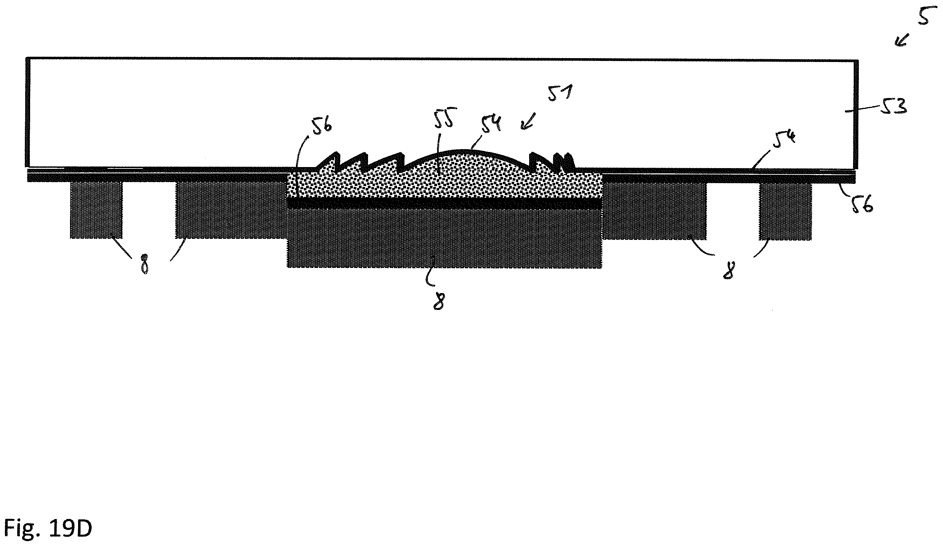

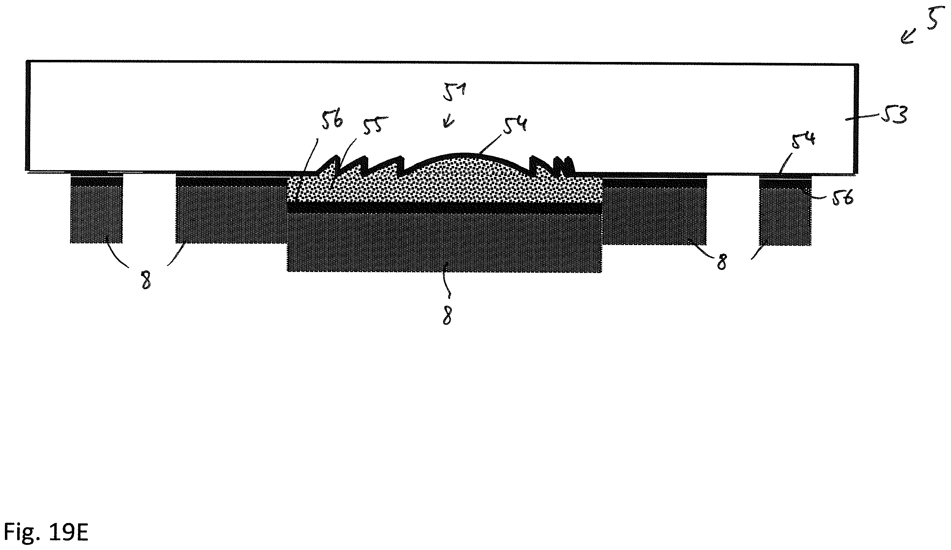

Auf die Substratfolie 53 mit einem Oberflächenrelief51 der beschriebenen Art wird auch hier eine semi-transparente Metallschicht 54 durch Bedampfen unter Vakuum aufgebracht (Fig. 19A). Anschließend wird nun die Abstandsschicht 55 partiell und im Passer zu dem Oberflächenrelief 51 aufgebracht (Fig. 19B) und vollflächig mit der zweiten Metallschicht 56 bedampft (Fig. 19C). Diese zweite Metallschicht 56 ist opak ausgebildet. In Bereichen, welche nicht mit der partiellen Abstandsschicht 8 versehen sind, liegt die zweite Metallschicht 56 direkt auf der ersten Metallschicht 54. In diesen Bereichen liegen bevorzugt metallisch diffraktive Effekte vor. Auf die, in diesem Ausführungsbeispiel opake, zweite Metallschicht 56 wird partiell und im Passer ein Ätzresist 8 aufgedruckt der in zu demetallisierenden Bereichen ausgespart bleibt (Fig. 19D). In den ausgesparten Bereichen werden anschließend durch Ätzen die erste 54 und die zweite Metallschicht 56 in einem Schritt entfernt (Fig. 19E). Hierfür müssen die erste 54 und die zweite Metallschicht 56 aus Metallen bestehen, welche mit der gleichen Ätzlösung entfernt werden können. Bevorzugt bestehen beide Metallschichten aus dem gleichen Metall, insbesondere bevorzugt bestehen beide Metalle aus Aluminium oder Kupfer.

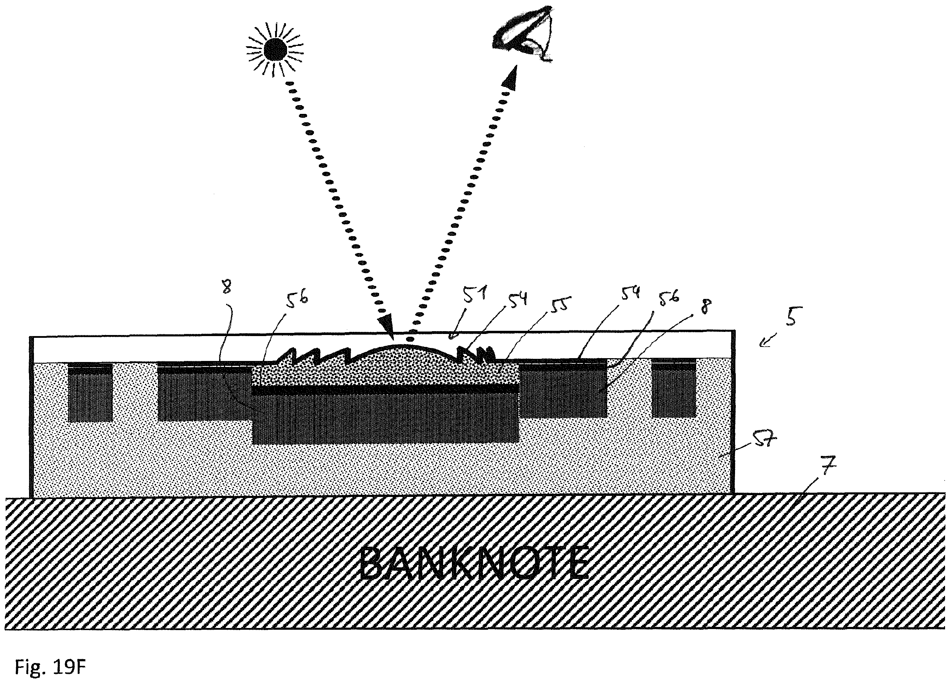

Der Mehrschichtkörper 5 kann nun wieder mittels einer Kleberschicht 57 auf eine Banknote 7 aufgebracht werden (Fig.19F). Auch in dieser Ausführungsform ist die Substratfolie entfernt (Heißprägevariante) und kein Fenster vorgesehen. Der Mehrschichtkörper 5 zeigt den gewünschten Effekt bei direkter Betrachtung von der Seite der Substratfolie her. Das Verfahren kommt, für dieses kombinierte Design mit metallischen Bereichen mit z.B. diffraktiven Effekten und Bereichen mit dem Farbkippeffekt, mit nur einem Demetallisierungsschritt aus.

## Patentansprüche

1. Verfahren zum Herstellen eines Mehrschichtkörpers, mit den Schritten:
a) Bereitstellen einer Substratfolie mit einer Replizierschicht;
b) Einformen eines für den Betrachter in Form einer dreidimensionalen Freiformfläche erscheinenden Oberflächenreliefs, welches insbesondere von linsenartig gestalteten, einen Vergrößerungs-, Verkleinerungs- oder Verzerrungseffekt erzeugenden Strukturen gebildet ist, in eine Oberfläche der Replizierschicht;
c) Aufbringen einer ersten Metallschicht auf die das Oberflächenrelief ausbildende Oberfläche der Replizierschicht;
d) nasschemisches Aufbringen einer zumindest teilweise transparenten Abstandsschicht auf die erste Metallschicht, wobei die Abstandsschicht in ihrer der Replizierschicht abgewandten Oberfläche ein weiteres Oberflächenrelief ausbildet, und wobei das Oberflächenrelief und das weitere Oberflächenrelief zumindest teilweise korrelieren;
e) Aufbringen einer zweiten Metallschicht auf die Abstandsschicht,
wobei mindestens eine der beiden Metallschichten semi-transparent ausgebildet ist, oder
a) Bereitstellen einer Substratfolie mit einer Replizierschicht;
b) Einformen eines für den Betrachter in Form einer dreidimensionalen Freiformfläche erscheinenden Oberflächenreliefs, welches insbesondere von linsenartig gestalteten, einen Vergrößerungs-, Verkleinerungs- oder Verzerrungseffekt erzeugenden Strukturen gebildet ist, in eine Oberfläche der Replizierschicht;
c) Aufbringen einer ersten hochbrechenden dielektrischen Schicht auf die das Oberflächenrelief ausbildende Oberfläche der Replizierschicht;
d) nasschemisches Aufbringen einer zumindest teilweise transparenten Abstandsschicht auf die erste dielektrische Schicht, wobei die Abstandsschicht in ihrer der Replizierschicht abgewandten Oberfläche ein weiteres Oberflächenrelief ausbildet, und wobei das Oberflächenrelief und das weitere Oberflächenrelief zumindest teilweise korrelieren;
e) Aufbringen einer zweiten hochbrechenden dielektrischen Schicht auf die Abstandsschicht,
wobei die Abstandschicht niedrigerbrechend als die erste und die zweite hochbrechende Schicht ist.

2. Verfahren nach Anspruch 1,
**dadurch gekennzeichnet,**
**dass** die Abstandsschicht durch Tiefdrucken, Vorhanggießen, Schlitzgießen, Spin-Coating oder Dip-Coating aufgebracht wird.

3. Verfahren nach Anspruch 1 oder 2,
**dadurch gekennzeichnet,**
**dass** die Abstandsschicht durch Aufbringen eines Lacks, insbesondere auf der Basis von Nitrocellulose, Epoxy-, Polyester-, Kolophonium-, Acrylat-, Alkyd-, Melamin-, PVA-, PVC-, Isocyanat- oder Urethansystemen erzeugt wird, wobei bevorzugt zum Aufbringen der Abstandsschicht ein Lack mit einer Viskosität von 5 mPa•s bis 250 mPa•s, bevorzugt von 15 mPa•s bis 200 mPa•s und besonders bevorzugt zwischen 20 und 170 mPa•s und/oder mit mindestens 30 % Massenanteil eines Lösemittels mit einem Polaritätsindex größer 3,0, bevorzugt mindestens 50 % Massenanteil eines Lösemittels mit einem Polaritätsindex größer 3,0 verwendet wird.

4. Verfahren nach einem der Ansprüche 1 bis 3,
**dadurch gekennzeichnet,**
**dass** die Abstandsschicht mit einer Nassschichtdicke von 1 µm bis 20 µm, bevorzugt von 2 µm bis 10 µm aufgebracht wird und/oder dass die Abstandsschicht nach dem Aufbringen getrocknet wird, insbesondere bei einer Temperatur von 40°C bis 200°C, bevorzugt von 40°C bis 150°C.

5. Verfahren nach einem der Ansprüche 1 bis 4,
**dadurch gekennzeichnet,**
**dass** die erste und/oder zweite Metallschicht durch Vakuumauftrag von Cr, Al, Cu, Ti, Ni, Ag oder Inconel insbesondere mit einer Schichtdicke von 2 nm bis 20 nm, bevorzugt von 4 nm bis 15 nm erzeugt wird, oder dass die erste und zweite hochbrechende dielektrische Schicht durch Vakuumauftrag von TiO₂, ZrO₂ oder ZnS insbesondere mit einer Schichtdicke von 10 nm bis 200 nm erzeugt wird und/oder dass die erste oder zweite Metallschicht durch Vakuumauftrag von Al, Cr, Ag, Cu, mit einer Schichtdicke von 15 nm bis 100 nm, bevorzugt von 20 nm bis 60 nm erzeugt wird.

6. Verfahren nach einem der vorhergehenden Ansprüche,
**dadurch gekennzeichnet,**
**dass** die Metallschicht und/oder die zweite Metallschicht partiell demetallisiert wird, insbesondere durch Ätzen und/oder Lift-off.

7. Verfahren nach Anspruch 6,
**dadurch gekennzeichnet,**
**dass** die Metallschicht und/oder der zweiten Metallschicht so demetallisiert wird, dass ein demetallisierter Bereich der Metallschicht und/oder der zweiten Metallschicht ein Symbol. Bild, Logo, alphanumerisches Zeichen oder eine Kombination daraus ausbildet und/ oder dass die Metallschicht und die zweite Metallschicht so demetallisiert werden, dass die demetallisierten Bereiche in Blickrichtung auf die Flächennormale der von dem Mehrschichtkörper aufgespannten Ebene überlappen und/oder dass die Metallschicht und die zweite Metallschicht so demetallisiert werden, dass ein metallischer Bereich einer der Metallschichten die Außenkontur eines demetallisierten Bereichs der jeweils anderen Metallschicht überlappt.

8. Mehrschichtkörper, insbesondere erhältlich nach einem Verfahren nach einem der Ansprüche 1 bis 7, umfassend:
- eine Substratfolie;
- eine auf einer Oberfläche der Substratfolie aufgebrachte Replizierschicht, in deren der Substratfolie abgewandten Oberfläche ein für den Betrachter in Form einer dreidimensionalen Freiformfläche erscheinendes Oberflächenrelief eingebracht ist, das insbesondere linsenartig gestaltete, einen Vergrößerungs-, Verkleinerungs- oder Verzerrungseffekt erzeugende Strukturen umfasst;
- eine erste Metallschicht oder eine erste hochbrechende dielektrische Schicht, die auf der das Oberflächenrelief ausbildenden Oberfläche der Replizierschicht angeordnet ist;
- eine nasschemisch aufgebrachte, zumindest teilweise transparente Abstandsschicht, die auf einer der Replizierschicht abgewandten Oberfläche der Metallschicht oder der hochbrechenden Schicht aufgebracht ist, und die ein weiteres Oberflächenrelief ausbildet, wobei das Oberflächenrelief und das weitere Oberflächenrelief zumindest teilweise korrelieren;
- eine zweite Metallschicht oder eine zweite hochbrechende dielektrische Schicht, die auf einer der ersten Metallschicht oder der ersten hochbrechende dielektrische Schicht abgewandten Oberfläche der Abstandsschicht aufgebracht ist.

9. Mehrschichtkörper nach Anspruch 8,
**dadurch gekennzeichnet,**
**dass** eine Strukturtiefe des weiteren Oberflächenreliefs höchstens 90%, bevorzugt 80%, weiter bevorzugt höchstens 50% einer Strukturtiefe des Oberflächenreliefs beträgt und/oder dass die Strukturtiefe des Oberflächenreliefs 200 nm bis 2000 nm, bevorzugt 300 nm bis 1500 nm, beträgt.

10. Mehrschichtkörper nach einem der Ansprüche 8 oder 9,
**dadurch gekennzeichnet,**
**dass** die Abstandsschicht eine Trockenschichtdicke von 200 nm bis 800 nm, bevorzugt von 300 nm bis 700 nm aufweist, wobei im Bereich des, in Form einer dreidimensionalen Freiformfläche erscheinenden, Oberflächenreliefs die Trockenschichtdicke über die Abstandsschicht variabel ist und/oder dass die Abstandsschicht einen Brechungsindex von 1,35 bis 1,65, bevorzugt von 1,5 aufweist und/oder dass das Oberflächenrelief Mikrostrukturen mit einem Tiefen-zu-Breiten-Verhältnis von weniger al 0,5, bevorzugt von weniger als 0,4 aufweist.

11. Mehrschichtkörper nach einem der Ansprüche 8 bis 10,
**dadurch gekennzeichnet,**
**dass** die Freiformfläche als diffraktives Freiformelement mit einer Gitterstruktur ausgebildet ist.

12. Mehrschichtkörper nach Anspruch 11,
**dadurch gekennzeichnet,**
**dass** die Gitterstruktur im Wesentlichen den Umrisslinien der Freiformfläche folgende Gitterlinien umfasst, wobei sich der Abstand der Gitterlinien über die Gitterstruktur hinweg verändert und sich insbesondere vom Mittelbereich der Freiformfläche aus zu deren Rand hin kontinuierlich verändert und/oder dass eine Periode der Gitterlinien zumindest in einem Teilbereich der Gitterstruktur weniger als 50 µm, bevorzugt weniger als 30 µm, besonders bevorzugt weniger als 15 µm beträgt.

13. Mehrschichtkörper nach einem der Ansprüche 8 bis 12,
**dadurch gekennzeichnet,**
**dass** die erste und/oder zweite Metallschicht aus Cr, Al, Cu, Ti, Ni, Ag oder Inconel besteht, oder
**dass** die erste und zweite hochbrechende dielektrische Schicht aus TiO₂, ZrO₂ oder ZnS besteht und/oder dass die erste und/oder zweite Metallschicht eine Schichtdicke Schichtdicke von 2 nm bis 20 nm, bevorzugt von 4 nm bis 15 nm aufweist, oder dass die erste und zweite hochbrechende dielektrische Schicht eine Schichtdicke von 10 nm bis 200 nm aufweist und/oder dass die erste oder zweite Metallschicht eine Schichtdicke von 15 nm bis 100 nm, bevorzugt von 20 nm bis 60 nm aufweist.

14. Mehrschichtkörper nach einem der Ansprüche 8 bis 13,
**dadurch gekennzeichnet,**
**dass** der Mehrschichtkörper zumindest eine Lackschicht aufweist, die mittels eines Farbstoffs und/oder Pigments eingefärbt ist, wobei bevorzugt die zumindest eine Lackschicht zwischen der Replizierschicht und der Metallschicht angeordnet ist, und/oder dass die Replizierschicht mittels eines Farbstoffs und/oder Pigments eingefärbt ist.

15. Sicherheitsdokument mit einem Mehrschichtkörper nach einem der Ansprüche 8 bis 14, wobei bevorzugt das Sicherheitsdokument als Ausweisdokument, Visadokument, Kreditkarte, Führerschein oder dergleichen ausgebildet ist.

## Claims

1. Method for producing a multilayer body, having the following steps:
a) providing a substrate film with a replication layer;
b) moulding a surface relief, which appears to the observer in the form of a three-dimensional freeform surface and is formed, in particular, from structures shaped like lenses and generating an enlargement, reduction or distortion effect, into a surface of the replication layer;
c) applying a first metallic layer to the surface of the replication layer forming the surface relief;
d) applying an at least partially transparent spacing layer to the first metallic layer by wet chemistry, wherein the spacing layer forms a further surface relief in its surface facing away from the replication layer, and wherein the surface relief and the further surface relief at least partially correlate;
e) applying a second metallic layer to the spacing layer, wherein at least one of the two metallic layers is formed semi-transparently, or
a) providing a substrate film with a replication layer;
b) moulding a surface relief, which appears to the observer in the form of a three-dimensional freeform surface and is formed, in particular, from structures shaped like lenses and generating an enlargement, reduction or distortion effect, into a surface of the replication layer;
c) applying a first highly refractive dielectric layer to the surface of the replication layer forming the surface relief;
d) applying an at least partially transparent spacing layer to the first dielectric layer by wet chemistry, wherein the spacing layer forms a further surface relief in its surface facing away from the replication layer, and wherein the surface relief and the further surface relief at least partially correlate;
e) applying a second highly refractive dielectric layer to the spacing layer,
wherein the spacing layer is less refractive than the first and the second highly refractive layer.

2. Method according to claim 1,
**characterised in that**
the spacing layer is applied by means of gravure printing, curtain coating, slot dying, spin coating or dip coating.

3. Method according to claim 1 or 2,
**characterised in that**
the spacing layer is generated by applying a lacquer, in particular based on nitrocellulose, epoxy, polyester, colophony, acrylate, alkyd, melamine, PVA, PVC, isocyanate or urethane systems, wherein a lacquer with a viscosity of from 5 mPa·s to 250 mPa·s, preferably from 15 mPa·s to 200 mPa·s and particularly preferably between 20 and 170 mPa·s, and/or with at least 30% mass portion of a solvent with a polarity index greater than 3.0, preferably at least 50% mass portion of a solvent with a polarity index greater than 3.0, is preferably used to apply the spacing layer.

4. Method according to one of claims 1 to 3,
**characterised in that**
the spacing layer is applied with a wet layer thickness of from 1µm to 20µm, preferably from 2µm to 10µm, and/or the spacing layer is dried after the application, in particular at a temperature of from 40°C to 200°C, preferably from 40°C to 150°C.

5. Method according to one of claims 1 to 4,
**characterised in that**
the first and/or second metallic layer is generated by vacuum deposition of Cr, Al, Cu, Ti, Ni, Ag or Inconel, in particular with a layer thickness of from 2nm to 20nm, preferably from 4nm to 15nm, or
the first and second highly refractive dielectric layer is generated by vacuum deposition of TiO₂, ZrO₂ or ZnS, in particular with a layer thickness of from 10nm to 200nm, and/or
the first or second metallic layer is generated by vacuum deposition of Al, Cr, Ag, Cu, with a layer thickness of from 15nm to 100nm, preferably from 20nm to 60nm.

6. Method according to one of the preceding claims,
**characterised in that**
the metallic layer and/or the second metallic layer is partially demetallised, in particular by etching and/or lift-off.

7. Method according to claim 6,
**characterised in that**
the metallic layer and/or the second metallic layer is demetallised in such a way that a demetallised region of the metallic layer and/or the second metallic layer forms a symbol, image, logo, alphanumerical character or a combination thereof, and/or the metallic layer and the second metallic layer are demetallised in such a way that, in the viewing direction of the surface normal, the demetallised regions overlap with the plane spanned by the multilayer body, and/or
the metallic layer and the second metallic layer are demetallised in such way that a metallic region of one of the metallic layers overlaps with the outer contour of a demetallised region of the other respective metallic layer.

8. Multilayer body, in particular that can be obtained according to a method according to one of claims 1 to 7, comprising:
- a substrate film;
- a replication layer applied to a surface of the substrate film, in whose surface facing away from the substrate film a surface relief which appears to the observer in the form of a three-dimensional freeform surface is introduced, which comprises structures shaped like lenses and generating an enlargement, reduction or distortion effect;
- a first metallic layer or a first highly refractive dielectric layer, which is arranged on the surface of the replication layer forming the surface relief;
- a wet-chemically applied, at least partially transparent spacing layer, which is applied on a surface of the metallic layer or the highly refractive layer facing away from the replication layer, and which forms a further surface relief, wherein the surface relief and the further surface relief at least partially correlate;
- a second metallic layer or a second highly refractive dielectric layer, which is applied to a surface of the spacing layer facing away from the first metallic layer or the first highly refractive dielectric layer.

9. Multilayer body according to claim 8,
**characterised in that**
a structural depth of the further surface relief is at most 90%, preferably 80%, further preferably at most 50% of a structural depth of the surface relief, and/or the structural depth of the surface relief is 200nm to 2000nm, preferably 300nm to 1500nm.

10. Multilayer body according to one of claims 8 or 9,
**characterised in that**
the spacing layer has a dry layer thickness of from 200nm to 800nm, preferably from 300nm to 700nm, wherein the dry layer thickness is variable over the spacing layer in the region of the surface relief which appears in the form of a three-dimensional freeform surface, and/or the spacing layer has a refractive index of from 1.35 to 1.65, preferably of 1.5, and/or the surface relief has microstructures with a depth-to-width ratio of less than 0.5, preferably less than 0.4.

11. Multilayer body according to one of claims 8 to 10,
**characterised in that**
the freeform surface is formed as a diffractive freeform element having a grating structure.

12. Multilayer body according to claim 11,
**characterised in that**
the grating structure substantially comprises grating lines following the outlines of the freeform surface, wherein the spacing of the grating lines changes across the grating structure and changes continuously, in particular from the central region of the freeform surface to its edge, and/or a period of the grating lines at least in a partial region of the grating structure is less than 50µm, preferably less than 30µm, particularly preferably less than 15µm.

13. Multilayer body according to one of claims 8 to 12,
**characterised in that**
the first and/or second metallic layer consists of Cr, Al, Cu, Ti, Ni, Ag or Inconel, or the first and second highly refractive dielectric layer consists of TiO₂, ZrO₂ or ZnS, and/or the first and/or second metallic layer has a layer thickness of from 2nm to 20nm, preferably from 4nm to 15nm, or the first and second highly refractive dielectric layer has a layer thickness of from 10nm to 200nm and/or the first or second metallic layer has a layer thickness of from 15nm to 100nm, preferably from 20nm to 60nm.

14. Multilayer body according to one of claims 8 to 13,
**characterised in that**
the multilayer body has at least one lacquer layer, which is dyed by means of a colourant and/or a pigment, wherein the at least one lacquer layer is preferably arranged between the replication layer and the metallic layer, and/or the replication layer is dyed by means of a colourant and/or a pigment.

15. Security document having a multilayer body according to one of claims 8 to 14, wherein the security document is preferably formed as an identity document, visa document, credit card, driving licence or similar.

## Revendications

1. Procédé servant à fabriquer un corps multicouche, avec les étapes :
a) de fourniture d'un film de substrat avec une couche de réplication ;
b) de façonnage d'un relief en surface, apparaissant pour l'observateur sous la forme d'une face à forme libre tridimensionnelle, lequel est formé en particulier par des structures configurées à la manière de lentilles, générant un effet d'agrandissement, de réduction ou de déformation, dans une surface de la couche de réplication ;
c) d'application d'une première couche de métal sur la surface, réalisant le relief en surface, de la couche de réplication ;
d) d'application chimique par voie humide d'une couche d'espacement au moins en partie transparente sur la première couche de métal, dans lequel la couche d'espacement réalise un autre relief en surface dans sa surface opposée à la couche de réplication, et dans lequel le relief en surface et l'autre relief en surface sont au moins en partie en corrélation ;
e) d'application d'une seconde couche de métal sur la couche d'espacement, dans lequel au moins une des deux couches de métal est réalisée de manière semi-transparente, ou
a) de fourniture d'un film de substrat avec une couche de réplication ;
b) de façonnage d'un relief en surface, apparaissant pour l'observateur sous la forme d'une face à forme libre tridimensionnelle, lequel est formé en particulier par des structures configurées à la manière de lentilles, générant un effet d'agrandissement, de réduction ou de déformation, dans une surface de la couche de réplication ;
c) d'application d'une première couche diélectrique à réfraction élevée sur la surface, réalisant le relief en surface, de la couche de réplication ;
d) d'application chimique par voie humide d'une couche d'espacement au moins en partie transparente sur la première couche diélectrique, dans lequel la couche d'espacement réalise un autre relief en surface dans sa surface opposée à la couche de réplication, et dans lequel le relief en surface et l'autre relief en surface sont au moins en partie en corrélation ;
e) d'application d'une seconde couche diélectrique à réfraction élevée sur la couche d'espacement,
dans lequel la couche d'espacement présente une réfraction inférieure à celle de la première et de la seconde couche à réfraction élevée.

2. Procédé selon la revendication 1,
**caractérisé en ce**
**que** la couche d'espacement est appliquée par héliogravure, coulage à rideau, coulée par fente, revêtement par centrifugation ou revêtement par immersion.

3. Procédé selon la revendication 1 ou 2,
**caractérisé en ce**
**que** la couche d'espacement est générée par application d'un vernis, en particulier à base de nitrocellulose, de systèmes époxy, polyester, de colophane, d'acrylate, d'alkyde, de mélamine, de PVA, de PVC, isocyanate ou d'uréthane, dans lequel de manière préférée aux fins de l'application de la couche d'espacement, un vernis avec une viscosité de 5 mPa.s à 250 mPa.s, de manière préférée de 15 mPa.s à 200 mPa.s et de manière particulièrement préférée entre 20 et 170 mPa.s et/ou avec au moins 30 % de fraction massique d'un solvant avec un indice de polarité supérieur à 3,0, de manière préférée au moins 50 % de fraction massique d'un solvant avec un indice de polarité supérieur à 3,0, est utilisé.

4. Procédé selon l'une quelconque des revendications 1 à 3,
**caractérisé en ce**
**que** la couche d'espacement est appliquée avec une épaisseur de couche humide de 1 µm à 20 µm, de manière préférée de 2 µm à 10 µm, et/ou que la couche d'espacement est séchée après l'application, en particulier à une température de 40 °C à 200 °C, de manière préférée de 40 °C à 150 °C.

5. Procédé selon l'une quelconque des revendications 1 à 4,
**caractérisé en ce**
**que** la première et/ou la seconde couche de métal est générée par une application sous vide de Cr, Al, Cu, Ti, Ni, Ag ou d'inconel en particulier avec une épaisseur de couche de 2 nm à 20 nm, de manière préférée de 4 nm à 15 nm, ou
**que** la première et la seconde couche diélectrique à réfraction élevée sont générées par application sous vide de TiO₂, ZrO₂ ou ZnS en particulier avec une épaisseur de couche de 10 nm à 200 nm, et/ou que la première ou la seconde couche de métal est générée par application sous vide de Al, Cr, Ag, Cu avec une épaisseur de couche de 15 nm à 100 nm, de manière préférée de 20 nm à 60 nm.

6. Procédé selon l'une quelconque des revendications précédentes,
**caractérisé en ce**
**que** la couche de métal et/ou la seconde couche de métal est démétallisée en partie, en particulier par décapage et/ou décollage.

7. Procédé selon la revendication 6,
**caractérisé en ce**
**que** la couche de métal et/ou la seconde couche de métal est démétallisée de telle sorte qu'une zone démétallisée de la couche de métal et/ou de la seconde couche de métal réalise un symbole, une image, un logo, un caractère alphanumérique ou une combinaison de ceux-ci, et/ou que la couche de métal et la seconde couche de métal sont démétallisées de telle sorte que les zones démétallisées se chevauchent dans le sens du regard sur la normale de surface du plan formé par le corps multicouche, et/ou que la couche de métal et la seconde couche de métal sont démétallisées de telle sorte qu'une zone métallique d'une des couches de métal chevauche le contour extérieur d'une zone démétallisée de l'autre couche de métal respectivement.

8. Corps multicouche, pouvant être obtenu en particulier selon un procédé selon l'une quelconque des revendications 1 à 7, comprenant :
- un film de substrat ;
- une couche de réplication, appliquée sur une surface du film de substrat, dans la surface, opposée au film de substrat, de laquelle un relief en surface, apparaissant pour l'observateur sous la forme d'une face à forme libre tridimensionnelle est pratiqué, qui comprend des structures configurées en particulier à la manière de lentilles, générant un effet d'agrandissement, de réduction ou de déformation ;
- une première couche de métal ou une première couche diélectrique à réfraction élevée, qui est disposée sur la surface, réalisant le relief en surface, de la couche de réplication ;
- une couche d'espacement appliquée de manière chimique par voie humide, au moins en partie transparente, qui est appliquée sur une surface, opposée à la couche de réplication, de la couche de métal ou de la couche à réfraction élevée et qui réalise un autre relief en surface, dans lequel le relief en surface et l'autre relief en surface sont au moins en partie en corrélation ;
- une seconde couche de métal ou une seconde couche diélectrique à réfraction élevée, qui est appliquée sur une surface, opposée à la première couche de métal ou à la première couche diélectrique à réfraction élevée, de la couche d'espacement.

9. Corps multicouche selon la revendication 8,
**caractérisé en ce**
**qu'**une profondeur de structure de l'autre relief en surface est au maximum 90 %, de manière préférée 80 %, de manière davantage préférée au maximum 50 % d'une profondeur de structure du relief en surface, et/ou que la profondeur de structure du relief en surface est de 200 nm à 2000 nm, de manière préférée de 300 nm à 1500 nm.

10. Corps multicouche selon l'une quelconque des revendications 8 ou 9,
**caractérisé en ce**
**que** la couche d'espacement présente une épaisseur de couche sèche de 200 nm à 800 nm, de manière préférée de 300 nm à 700 nm, dans lequel l'épaisseur de couche sèche sur la couche d'espacement est variable dans la zone du relief en surface, apparaissant sous la forme d'une face à forme libre tridimensionnelle, et/ou que la couche d'espacement présente un indice de réfraction de 1,35 à 1,65, de manière préférée de 1,5, et/ou que le relief en surface présente des microstructures avec un rapport profondeur/largeur inférieur à 0,5, de manière préférée inférieur à 0,4.

11. Corps multicouche selon l'une quelconque des revendications 8 à 10,
**caractérisé en ce**
**que** la face à forme libre est réalisée en tant qu'élément à forme libre diffractif avec une structure de grille.

12. Corps multicouche selon la revendication 11,
**caractérisé en ce**
**que** la structure de grille comprend des lignes de grille suivant sensiblement les lignes de contour de la face à forme libre, dans lequel l'espacement entre les lignes de grille se modifie au-delà de la structure de grille et se modifie en particulier depuis la zone centrale de la face à forme libre vers son bord en continu, et/ou qu'une période des lignes de grille au moins dans une zone partielle de la structure de grille est inférieure à 50 µm, de manière préférée inférieure à 30 µm, de manière particulièrement préférée inférieure à 15 µm.

13. Corps multicouche selon l'une quelconque des revendications 8 à 12,
**caractérisé en ce**
**que** la première et/ou la seconde couche de métal est constituée de Cr, Al, Cu, Ti, Ni, Ag, ou d'inconel, ou
**que** la première et la seconde couche diélectrique à réfraction élevée sont constituées de TiO₂, ZrO₂ ou ZnS, et/ou que la première et/ou la seconde couche de métal présente une épaisseur de couche épaisseur de couche de 2 nm à 20 nm, de manière préférée de 4 nm à 15 nm, ou que la première et la seconde couche diélectrique à réfraction élevée présentent une épaisseur de couche de 10 nm à 200 nm et/ou que la première ou la seconde couche de métal présente une épaisseur de couche de 15 nm à 100 nm, de manière préférée de 20 nm à 60 nm.

14. Corps multicouche selon l'une quelconque des revendications 8 à 13,
**caractérisé en ce**
**que** le corps multicouche présente au moins une couche de vernis, qui peut être colorée au moyen d'un colorant et/ou d'un pigment, dans lequel de manière préférée l'au moins une couche de vernis est disposée entre la couche de réplication et la couche de métal, et/ou que la couche de réplication est colorée au moyen d'un colorant et/ou d'un pigment.

15. Document de sécurité avec un corps multicouche selon l'une quelconque des revendications 8 à 14, dans lequel de manière préférée le document de sécurité est réalisé en tant que document d'identité, visa, carte de crédit, permis de conduire ou similaire.
